(19) **Europäisches Patentamt / European Patent Office / Office européen des brevets**

(11) **EP 3 076 092 B1**

(12) **EUROPEAN PATENT SPECIFICATION**

(45) Date of publication and mention
of the grant of the patent:
**04.03.2020 Bulletin 2020/10**

(21) Application number: **13898363.0**

(22) Date of filing: **26.11.2013**

(51) Int Cl.:
**G05D 23/19** *(2006.01)*     **F24F 11/30** *(2018.01)*

(86) International application number:
**PCT/JP2013/081823**

(87) International publication number:
**WO 2015/079506 (04.06.2015 Gazette 2015/22)**

(54) **AIR-CONDITIONING CONTROL DEVICE**

**KLIMAANLAGENSTEUERUNGSVORRICHTUNG**

**DISPOSITIF DE COMMANDE DE CONDITIONNEMENT D'AIR**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2016 Bulletin 2016/40**

(73) Proprietor: **Mitsubishi Electric Corporation Tokyo 100-8310 (JP)**

(72) Inventors:
• **TAKEDA, Emi**
  **Tokyo 100-8310 (JP)**
• **ITO, Shinichi**
  **Tokyo 100-8310 (JP)**
• **UNEZAKI, Fumitake**
  **Tokyo 100-8310 (JP)**
• **YANO, Hirotoshi**
  **Tokyo 100-8310 (JP)**

• **YOSHIKAWA, Toshiaki**
  **Tokyo 100-8310 (JP)**
• **MATSUMOTO, Takashi**
  **Tokyo 100-8310 (JP)**
• **SUGIYAMA, Daisuke**
  **Tokyo 100-8310 (JP)**

(74) Representative: **Mewburn Ellis LLP City Tower 40 Basinghall Street London EC2V 5DE (GB)**

(56) References cited:
**EP-A1- 0 704 659      EP-A1- 1 326 055**
**EP-A2- 2 357 418      JP-A- S6 428 443**
**JP-A- S60 142 136     JP-A- S63 161 338**
**JP-A- 2010 181 043    JP-A- 2012 202 581**
**US-A1- 2010 243 231   US-A1- 2010 318 227**
**US-A1- 2012 130 547**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an air-conditioning control apparatus.

Background Art

A conventional air-conditioning control apparatus causes an air-conditioner to perform a preceding operation prior to a specified time so that room temperature reaches a target temperature at the specified time with a minimum amount of electricity (see, for example, Patent Literature 1).

Citation List

Patent Literature

Patent Literature 1: Japanese Unexamined Patent Application Publication No. 63-161338 (claims)
US2010/0318227 A1 discloses a system, method and apparatus for just-in-time conditioning using a thermostat
EP1326055 A1 discloses an air conditioner and temperature detector
US2010/0243231 A1 discloses an energy management improvement for a heating system with reduced setpoint temperature during no occupancy based upon historical sampling of room thermal response with highest power heat applied

Summary of Invention

Technical Problem

In the conventional air-conditioning control apparatus, however, a rotation speed of a compressor is not corrected in the preceding operation, but is corrected in a subsequent preceding operation after the preceding operation based on operation data accumulated in the preceding operation.
Thus, since the conventional air-conditioning control apparatus drives the compressor at a rotation speed based on a result of the previous preceding operation, room temperature might fail to reach a target temperature at a specified time in some cases.
The present invention has been made to solve the problems as described above, and provides an air-conditioning control apparatus that can cause room temperature to reach a target temperature Tm at a specified time. Solution to Problem
An air-conditioning control apparatus according to the present invention is set forth in claim 1.

Advantageous Effects of Invention

According to the present invention, a time change rate of a set time is corrected in a preceding operation so that a room temperature can reach a target temperature at a specified time.

Brief Description of Drawings

[Fig. 1] Fig. 1 shows examples of changes with time of a set temperature Tset and a room temperature Ta in a case where a time change rate of the set temperature Tset does not change and the room temperature Ta reaches a target temperature Tm in a preceding operation in Embodiment 1 of the present invention.
[Fig. 2] Fig. 2 shows examples of changes with time of the set temperature Tset and the room temperature Ta in a case where the time change rate of the set temperature Tset does not change and the room temperature Ta does not reach the target temperature Tm in the preceding operation in Embodiment 1 of the present invention.
[Fig. 3] Fig. 3 shows examples of changes with time of the set temperature Tset and the room temperature Ta in a case where the time change rate of the set temperature Tset changes and the room temperature Ta reaches the target temperature Tm in the preceding operation in Embodiment 1 of the present invention.
[Fig. 4] Fig. 4 schematically shows a concept in which a time change rate of a set temperature Tset is changed by a time unit $\Delta t$ and a set temperature unit $\Delta Tset$ at each time in the preceding operation in Embodiment 1 of the present invention.

[Fig. 5] Fig. 5 shows an example of a correlation between the time change rate of the set temperature Tset and the time unit Δt in a case where the set temperature unit ΔTset in Embodiment 1 of the present invention is constant.

[Fig. 6] Fig. 6 shows an example of a correlation between the time change rate of the set temperature Tset and the set temperature unit ΔTset in a case where the time unit Δt in Embodiment 1 of the present invention is constant.

[Fig. 7] Fig. 7 illustrates an example of a functional configuration of the air-conditioning control apparatus including a set temperature determination section that performs a proportional operation based on a current set temperature in Embodiment 1 of the present invention.

[Fig. 8] Fig. 8 illustrates an example of a functional configuration of the air-conditioning control apparatus including a set temperature determination section that performs an integral operation based on a current set temperature in Embodiment 1 of the present invention.

[Fig. 9] Fig. 9 illustrates an example a functional configuration of the air-conditioning control apparatus including a set temperature determination section that performs a derivative operation based on a current set temperature in Embodiment 1 of the present invention.

[Fig. 10] Fig. 10 illustrates an example of a functional configuration of the air-conditioning control apparatus including a set temperature determination section that performs a proportional operation based on an expected room temperature Tp in Embodiment 1 of the present invention.

[Fig. 11] Fig. 11 illustrates an example of a functional configuration of the air-conditioning control apparatus including a set temperature determination section that performs an integral operation based on an expected room temperature Tp in Embodiment 1 of the present invention.

[Fig. 12] Fig. 12 illustrates an example of a functional configuration of the air-conditioning control apparatus including a set temperature determination section that performs a derivative operation based on an expected room temperature Tp in Embodiment 1 of the present invention.

[Fig. 13] Fig. 13 illustrates an example of a functional configuration of the air-conditioning control apparatus including a set temperature determination section that performs a proportional operation based on a previous room temperature in Embodiment 1 of the present invention.

[Fig. 14] Fig. 14 illustrates an example of a functional configuration of the air-conditioning control apparatus including a set temperature determination section that performs an integral operation based on a previous room temperature in Embodiment 1 of the present invention.

[Fig. 15] Fig. 15 illustrates an example of a functional configuration of the air-conditioning control apparatus including a set temperature determination section that performs a derivative operation based on a previous room temperature in Embodiment 1 of the present invention.

[Fig. 16] Fig. 16 illustrates an example of a functional configuration of the air-conditioning control apparatus including a set temperature determination section that performs a proportional operation based on a temperature glide in Embodiment 1 of the present invention.

[Fig. 17] Fig. 17 illustrates an example of a functional configuration of the air-conditioning control apparatus including a set temperature determination section that performs an integral operation based on a temperature glide in Embodiment 1 of the present invention.

[Fig. 18] Fig. 18 illustrates an example of a functional configuration of the air-conditioning control apparatus including a set temperature determination section that performs a derivative operation based on a temperature glide in Embodiment 1 of the present invention.

[Fig. 19] Fig. 19 schematically illustrates an example of a configuration of a HEMS 51 in Embodiment 1 of the present invention.

[Fig. 20] Fig. 20 illustrates an example of a refrigerant circuit configuration of an air-conditioner 63 in Embodiment 1 of the present invention.

[Fig. 21] Fig. 21 is a flowchart showing a power saving control process in Embodiment 1 of the present invention.

[Fig. 22] Fig. 22 is a flowchart showing a set temperature Tset changing process in Embodiment 1 of the present invention.

[Fig. 23] Fig. 23 is a flowchart showing a power saving timer control process in Embodiment 1 of the present invention.

[Fig. 24] Fig. 24 is a flowchart showing a power saving control process in Embodiment 2 of the present invention.

[Fig. 25] Fig. 25 illustrates an example configuration of arrangement of an infrared radiation sensor 203 provided in an air-conditioner 63 in Embodiment 3 of the present invention.

[Fig. 26] Fig. 26 illustrates an air-conditioning control apparatus that converts a detection result of the infrared radiation sensor 203 to a room temperature Ta in Embodiment 3 of the present invention.

[Fig. 27] Fig. 27 illustrates an air-conditioning control apparatus that limits a target temperature Tm in Embodiment 4 of the present invention.

[Fig. 28] Fig. 28 illustrates an air-conditioning control apparatus that limits a current in Embodiment 5 of the present invention.

[Fig. 29] Fig. 29 illustrates an air-conditioning control apparatus that issues a notification or an operation permission request in Embodiment 6 of the present invention.

[Fig. 30] Fig. 30 illustrates an air-conditioning control apparatus that performs a presence detection operation in Embodiment 7 of the present invention.

[Fig. 31] Fig. 31 illustrates an air-conditioning control apparatus that performs a process of selecting an air-conditioner 63 as a control target based on an operation history in Embodiment 8 of the present invention.

[Fig. 32] Fig. 32 illustrates an air-conditioning control apparatus that performs a process of selecting an air-conditioner 63 as a control target based on life pattern information in Embodiment 9 of the present invention.

[Fig. 33] Fig. 33 illustrates an air-conditioning control apparatus that performs a process of converting a set temperature Tset to an integer value in Embodiment 10 of the present invention.

Description of Embodiments

Embodiments of the present invention will be hereinafter described in detail with reference to the drawings. Embodiments of the present invention are applied to an air-conditioning system that is controlled in startup with a reduced amount of electricity in a cooling or heating operation.

Embodiment 1

(Configuration of Embodiment 1)

(Power Saving Control)

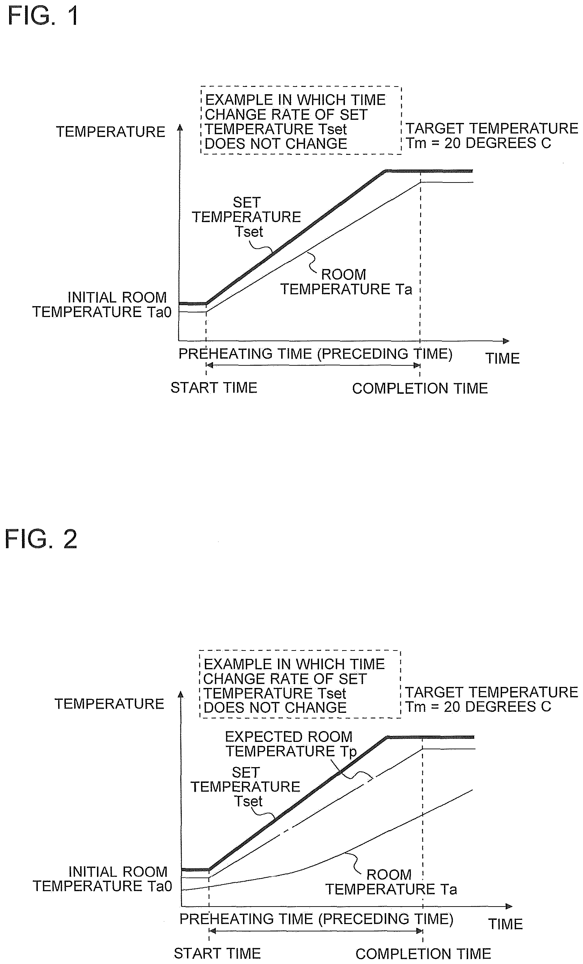

Fig. 1 shows examples of changes with time of a set temperature Tset and a room temperature Ta in a case where a time change rate of the set temperature Tset does not change and the room temperature Ta reaches a target temperature Tm in a preceding operation in Embodiment 1 of the present invention. As shown in Fig. 1, under power saving control, a rotation speed of a compressor 151 (described later) is reduced lower than that in normal control so that an operation efficiency can be enhanced.

Fig. 1 shows an example of a heating operation in a case where power saving control is performed based on an instruction on the set temperature Tset. The set temperature Tset is set approximately equal to a room temperature Ta at a start time, and is then gradually increased to a target temperature Tm until a completion time.

Thus, a temperature difference between the set temperature Tset and the room temperature Ta is kept small, a rotation speed of a compressor 151 (described later) is reduced so that an operation efficiency is enhanced and the amount of power consumption can be reduced. As a time change rate of the set temperature Tset decreases, the temperature difference between the room temperature Ta and the set temperature Tset decreases, and the rotation speed of the compressor 151 (described later) decreases. However, if the time change rate of the set temperature Tset is excessively reduced, an excessively long time is needed for precooling or preheating, resulting in an increase in the amount of power consumption. In view of this, an initial value of the time change rate of the set temperature Tset is appropriately determined in accordance with an efficiency characteristic of an air-conditioner 63 (described later) and a heat load D (heat capacity) of a room. A preheating time period and a completion time are determined depending on the time change rate of the set temperature Tset.

(Power Saving Control: Correction Control)

Fig. 2 shows examples of changes with time of the set temperature Tset and the room temperature Ta in a case where the time change rate of the set temperature Tset does not change and the room temperature Ta does not reach the target temperature Tm in the preceding operation in Embodiment 1 of the present invention. As shown in Fig. 2, in a case where a heat load D (heat capacity) of a room is large, it is assumed that an actual room temperature Ta does not increase unlike an expected room temperature Tp and fails to reach the target temperature Tm before the completion time.

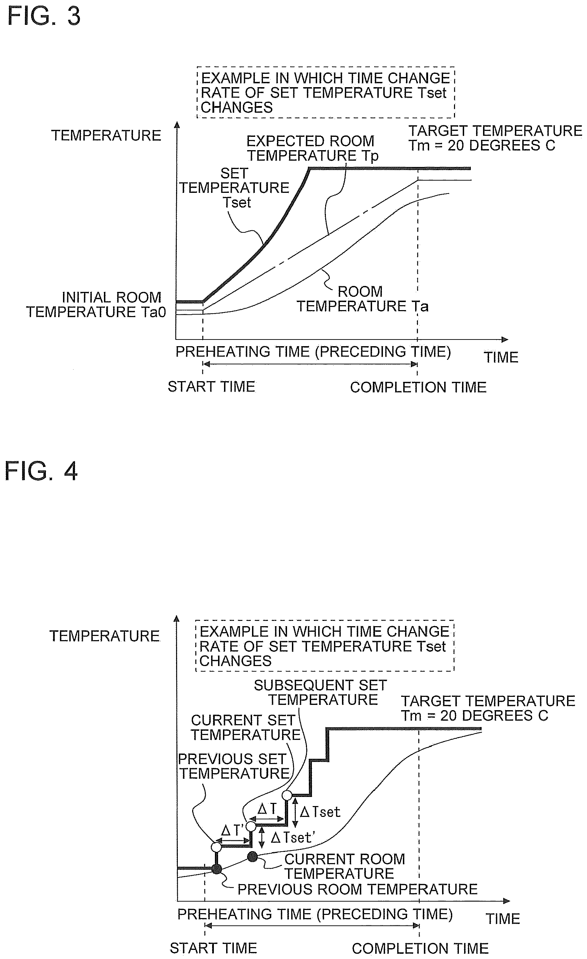

Thus, as will be described later with reference to Fig. 3, in a case where the room temperature Ta changes slowly in precooling/preheating control, correction control of changing the set temperature Tset relatively early is performed. Fig. 3 shows examples of changes with time of the set temperature Tset and the room temperature Ta in a case where the time change rate of the set temperature Tset changes and the room temperature Ta reaches the target temperature Tm in the preceding operation in Embodiment 1 of the present invention. As will be described later, correction control is a combination of proportional control, integral control, and derivative control. Specifically, a time change rate dTset/dt of the set temperature Tset is changed. This will be more specifically described with reference to Figs. 4 to 6.

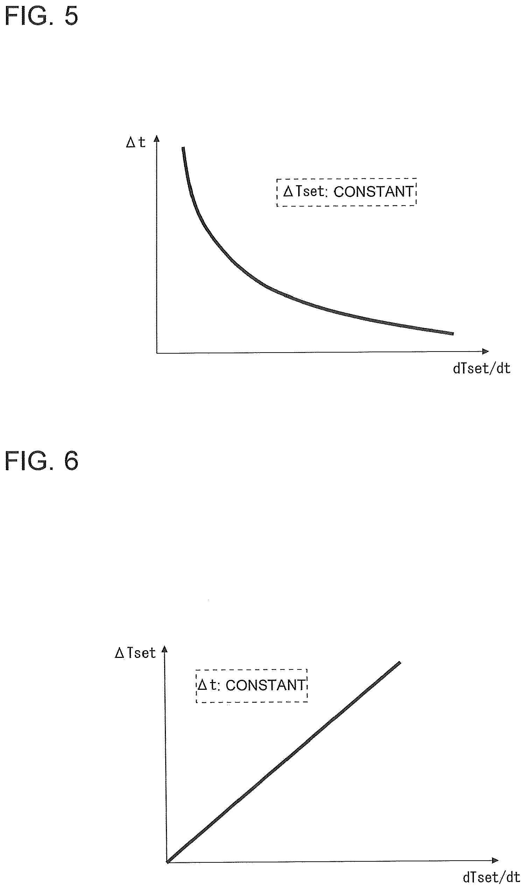

Fig. 4 schematically shows a concept in which a time change rate of a set temperature Tset is changed by a time unit Δt and a set temperature unit ΔTset at each time in the preceding operation in Embodiment 1 of the present invention. A set temperature and a room temperature at the current time will be hereinafter referred to as a current set temperature and a current room temperature, respectively. A set temperature and a room temperature before a predetermined time unit Δt' will be hereinafter referred to as a previous set temperature and a previous room temperature, respectively. A set temperature after a predetermined time unit Δt will be hereinafter referred to as a subsequent set temperature. Fig. 5 shows an example of a correlation between the time change rate of the set temperature Tset and the time unit Δt in a case where the set temperature unit ΔTset in Embodiment 1 of the present invention is constant. Fig. 6 shows an example of a correlation between the time change rate of the set temperature Tset and the set temperature unit ΔTset in a case where the time unit Δt in Embodiment 1 of the present invention is constant.

To change the time change rate dTset/dt of the set temperature Tset, the time unit Δt and the set temperature unit ΔTset are operated as shown in Fig. 4. If the set temperature unit ΔTset is a constant value, such as 1 degree C, a time unit Δt is determined in accordance with dTset/dt as shown in Fig. 5. If the time unit Δt is constant, a set temperature unit ΔTset is determined in accordance with dTset/dt as shown in Fig. 6.

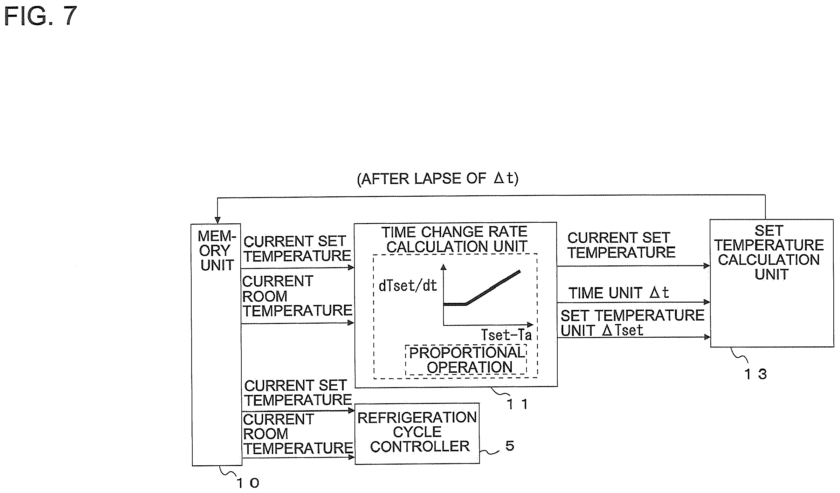

Fig. 7 illustrates an example of a functional configuration of the air-conditioning control apparatus including a set temperature determination section that performs a proportional operation based on a current set temperature in Embodiment 1 of the present invention. As illustrated in Fig. 7, the set temperature determination section includes a time change rate calculation unit 11, a set temperature calculation unit 13, and a memory unit 10. The time change rate calculation unit 11 obtains a time change rate dTset/dt of the set temperature Tset based on the set temperature unit ΔTset and the time unit Δt. The set temperature calculation unit 13 obtains a set temperature Tset at the current time based on a previous set temperature Tset and the time change rate dTset/dt of the set temperature Tset.

A refrigeration cycle controller 5 illustrated in Fig. 7 controls a refrigeration cycle of the air-conditioner 63 (described later). The refrigeration cycle controller 5 detects a current set temperature and a current room temperature and controls a refrigeration cycle. The refrigeration cycle controller 5 detects a current set temperature and a current room temperature and controls a refrigeration cycle.

The time change rate calculation unit 11 reads the current set temperature and the current room temperature from the memory unit, and obtains a time change rate dTset/dt of the set temperature Tset based on the current set temperature Tset and the current room temperature Ta. If ΔTset is a constant value such as 1 degree C, a time unit Δt is determined in accordance with dTset/dt. If the time unit Δt is constant, a set temperature unit ΔTset is determined in accordance with dTset/dt. When a duration time of the current set temperature exceeds the time unit Δt, the set temperature calculation unit 13 changes the set temperature from the current set temperature to a subsequent set temperature. Then, the subsequent set temperature Tset is stored as a current set temperature in a memory unit.

In proportion to the temperature difference between the room temperature Ta and the set temperature Tset, the time change rate dTset/dt of the set temperature Tset is increased, and a heating capacity of the air-conditioner 63 is increased so that the room temperature reaches the target temperature Tm earlier (proportional control).

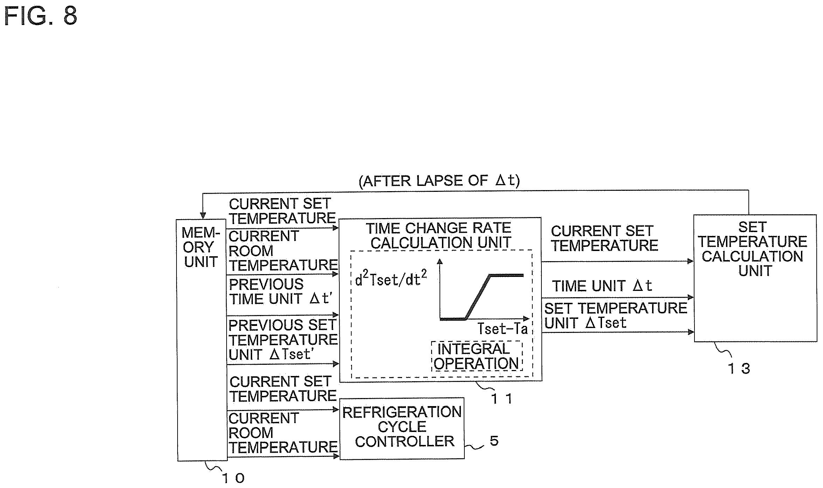

Fig. 8 illustrates an example of a functional configuration of the air-conditioning control apparatus including a set temperature determination section that performs an integral operation based on a current set temperature in Embodiment 1 of the present invention. In proportion to the temperature difference between the room temperature Ta and the set temperature Tset, $d^2Tset/dt^2$ is increased and the heating capacity of the air-conditioner 63 is increased so that the room temperature reaches the target temperature Tm earlier (integral control). At this time, the time change rate calculation unit 11 obtains a time change rate dTset/dt of the set temperature Tset based on the current set temperature, the current room temperature, the previous time unit Δt', and the previous set temperature unit ΔTset' from the memory unit.

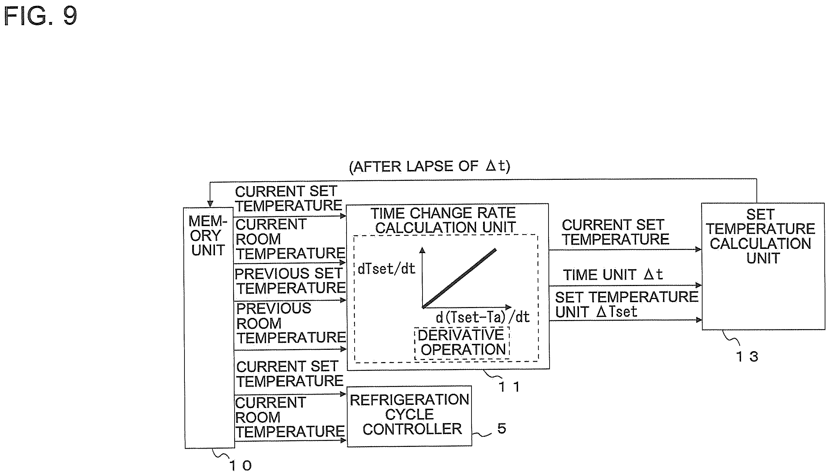

Fig. 9 illustrates an example a functional configuration of the air-conditioning control apparatus including a set temperature determination section that performs a derivative operation based on a current set temperature in Embodiment 1 of the present invention. In proportion to a time change rate d(TsetΔTa)/dt of the temperature difference between the room temperature Ta and the set temperature Tset, dTset/dt is increased, and the heating capacity of the air-conditioner 63 is increased so that the room temperature Ta reaches the target temperature Tm earlier (derivative control). At this time, the time change rate calculation unit 11 obtains a time change rate dTset/dt of the set temperature Tset based on the current set temperature, the current room temperature, the previous set temperature, and the previous room temperature from the memory unit.

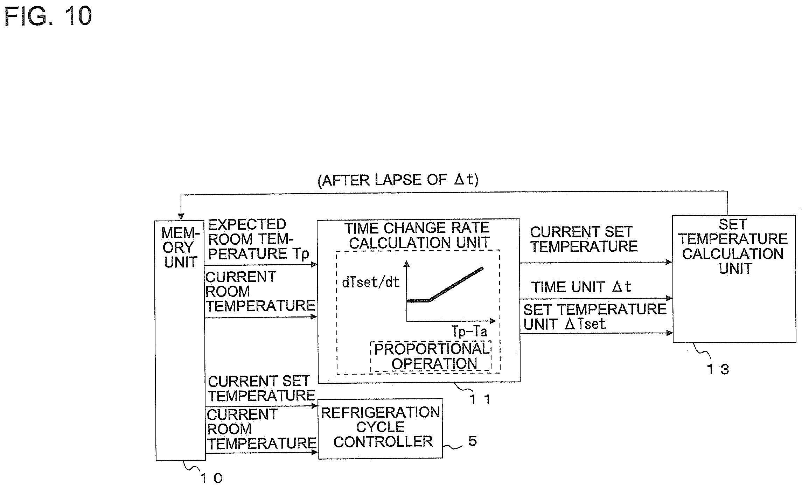

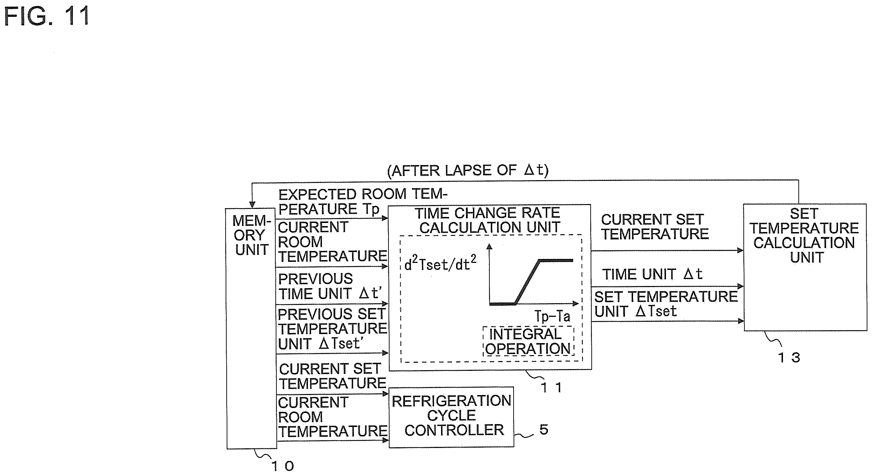

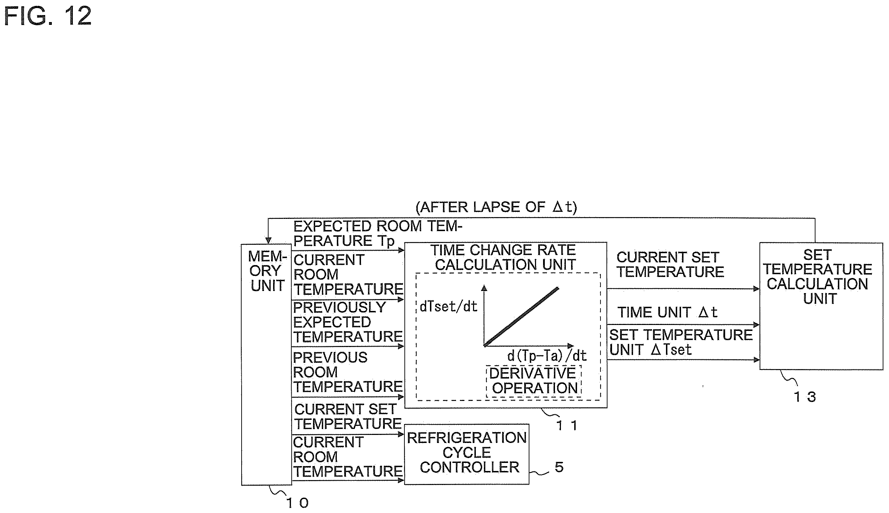

Fig. 10 illustrates an example of a functional configuration of the air-conditioning control apparatus including a set temperature determination section that performs a proportional operation based on an expected room temperature Tp in Embodiment 1 of the present invention. Fig. 11 illustrates an example of a functional configuration of the air-conditioning control apparatus including a set temperature determination section that performs an integral operation based on an expected room temperature Tp in Embodiment 1 of the present invention. Fig. 12 illustrates an example of a functional configuration of the air-conditioning control apparatus including a set temperature determination section that performs a derivative operation based on an expected room temperature Tp in Embodiment 1 of the present invention.

When correction control greatly changes the set temperature Tset, the temperature difference between the room temperature Ta and the set temperature Tset increases so that correction might continue longer than necessary.

In view of this, an expected room temperature Tp obtained by expecting a room temperature Ta may be used instead of the set temperature Tset. In proportion to the temperature difference between the room temperature Ta and the expected room temperature Tp, the time change rate dTset/dt of the set temperature Tset is increased, and the heating capacity of the air-conditioner 63 is increased so that the room temperature reaches the target temperature Tm earlier (proportional control). In proportion to the temperature difference between the room temperature Ta and the expected room temperature Tp, $d^2Tset/dt^2$ is increased, and the heating capacity of the air-conditioner 63 is increased so that the room temperature reaches the target temperature Tm earlier (integral control). In proportion to the time change rate d(Tp∆Ta)/dt of the temperature difference between the room temperature Ta and the expected room temperature Tp, dTset/dt is increased, and the heating capacity of the air-conditioner 63 is increased so that the room temperature reaches the target temperature Tm earlier (derivative control).

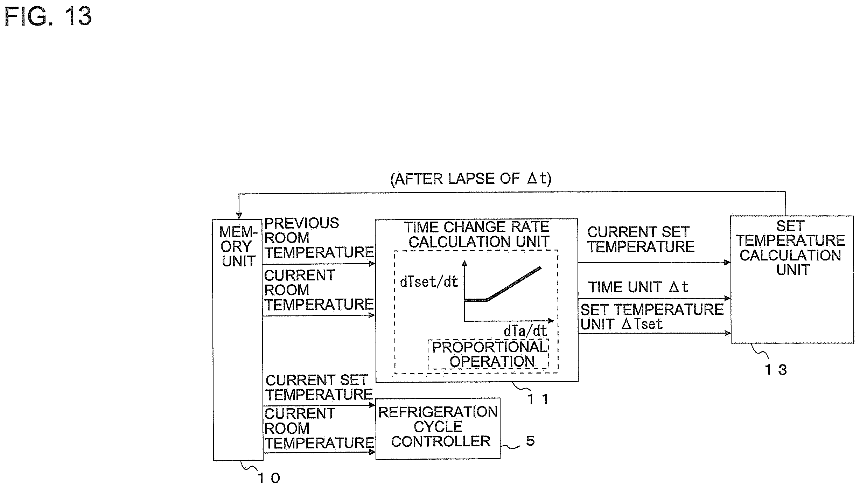

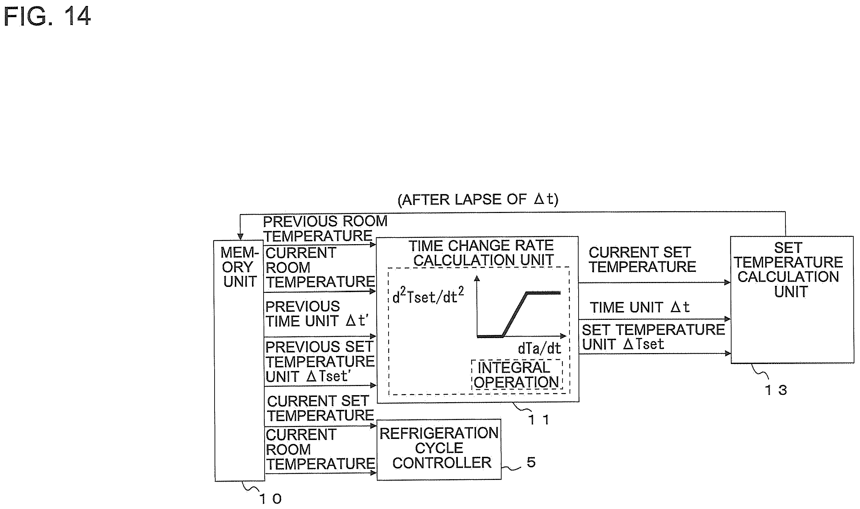

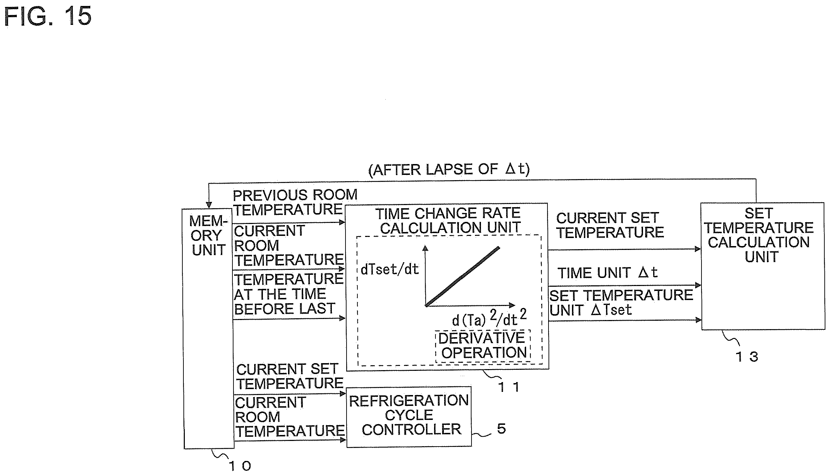

Fig. 13 illustrates an example of a functional configuration of the air-conditioning control apparatus including a set temperature determination section that performs a proportional operation based on a previous room temperature in Embodiment 1 of the present invention. Fig. 14 illustrates an example of a functional configuration of the air-conditioning control apparatus including a set temperature determination section that performs an integral operation based on a previous room temperature in Embodiment 1 of the present invention. Fig. 15 illustrates an example of a functional configuration of the air-conditioning control apparatus including a set temperature determination section that performs a derivative operation based on a previous room temperature according to Embodiment 1 of the present invention.

As the time change rate dTa/dt of the room temperature Ta decreases, the time change rate dTset/dt of the set temperature Tset is increased, and the heating capacity of the air-conditioner 63 is increased so that the room temperature reaches the target temperature Tm earlier (proportional control). As the time change rate dTa/dt of the room temperature Ta decreases, $d^2Tset/dt^2$ is increased, and the heating capacity of the air-conditioner 63 is increased so that the room temperature Ta reaches the target temperature Tm earlier (integral control). As the time change rate $d^2Tset/dt^2$ of dTa/dt decreases, dTset/dt is increased, and the heating capacity of the air-conditioner 63 is increased so that the room temperature reaches the target temperature Tm earlier (derivative control).

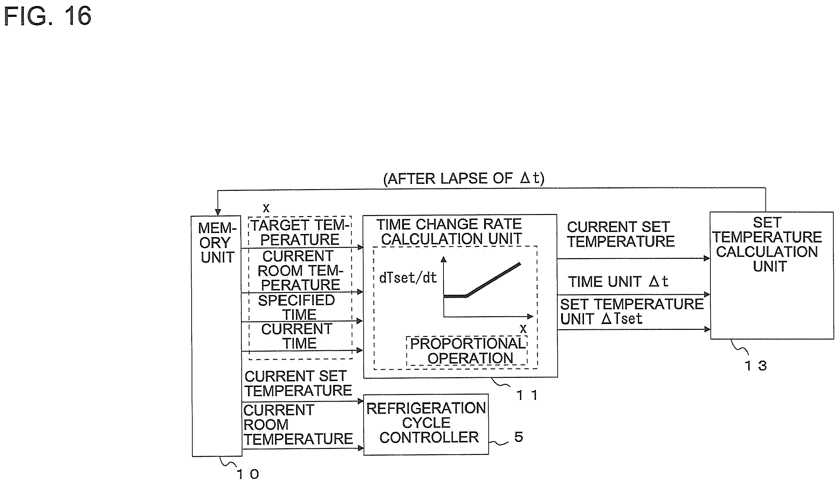

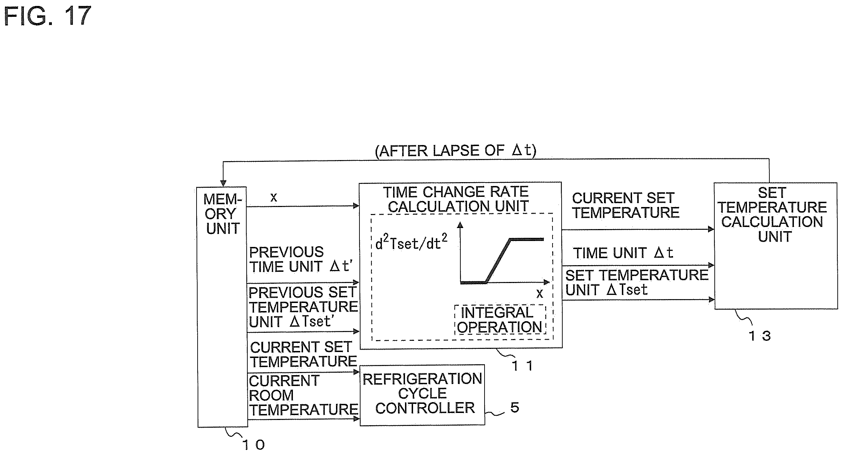

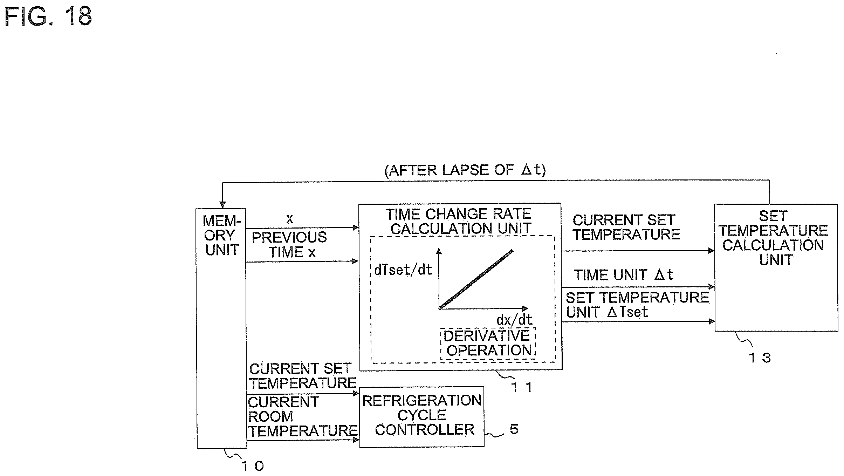

Fig. 16 illustrates an example of a functional configuration of the air-conditioning control apparatus including a set temperature determination section that performs a proportional operation based on a temperature glide in Embodiment 1 of the present invention. Fig. 17 illustrates an example of a functional configuration of the air-conditioning control apparatus including a set temperature determination section that performs an integral operation based on a temperature glide in Embodiment 1 of the present invention. Fig. 18 illustrates an example of a functional configuration of the air-conditioning control apparatus including a set temperature determination section that performs a derivative operation based on a temperature glide in Embodiment 1 of the present invention.

A temperature glide x between the room temperature Ta and the target temperature Tm is defined as Equation (1). In proportion to the temperature glide x, the time change rate dTset/dt of the set temperature Tset is increased, and the heating capacity of the air-conditioner 63 is increased so that the room temperature reaches the target temperature Tm earlier (proportional control). In proportion to the temperature glide x, $d^2Tset/dt^2$ is increased, and the heating capacity of the air-conditioner 63 is increased so that the room temperature reaches the target temperature Tm earlier (integral control). In proportion to the time change rate dx/dt of the temperature glide x, dTset/dt is increased, and the heating capacity of the air-conditioner 63 is increased so that the room temperature reaches the target temperature Tm earlier (derivative control).

[Equation 1]

$$X = (\text{target temperature Tm - room temperature Ta})/(\text{completion time - current time}) \qquad (1)$$

(Configuration of HEMS 51)

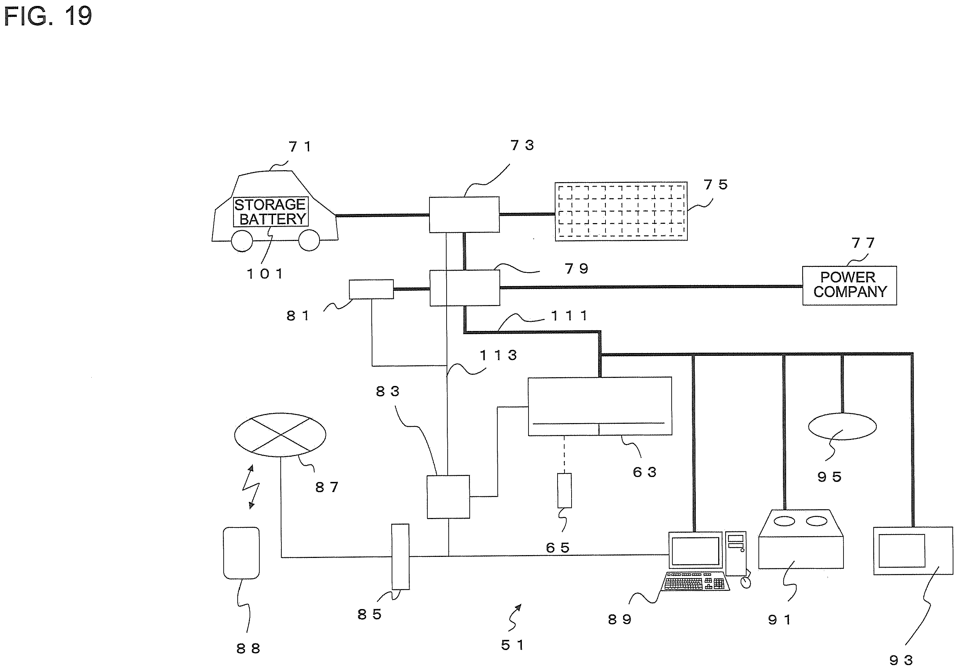

Fig. 19 schematically illustrates an example of a configuration of a HEMS 51 in Embodiment 1 of the present invention. Home electric appliances, such as an air-conditioner 63, a terminal 89, an IH cooking heater 91, a range grill 93, and a lighting fixture 95, are provided in a house, and an electric vehicle 71 incorporating a photovoltaic array 75 and a storage battery 101 is provided outdoors, and a power conditioner 73, a distribution switchboard 79, and a power consumption measuring instrument 81 are provided. These components are connected to one another by power supply lines 111.

The home electric appliances are supplied with electricity from an electric power company 77, the photovoltaic array 75, or the storage battery 101, and power consumption thereof is measured by the power consumption measuring instrument 81. The home electric appliances are connected to a HEMS controller 83 by communication lines 113 so that driving information can be acquired and a control instruction can be issued.

For example, the air-conditioner 63 can receive an instruction issued from the HEMS controller 83 in a manner similar to that of remote control, such as an instruction of an operation or stopping, a change of an operation mode, including cooling, heating, air blowing, and dehumidification, or a change of a set temperature Tset, an airflow rate, and a wind direction. The power conditioner 73 and the power consumption measuring instrument 81 are also connected to the HEMS controller 83 by the communication lines 113 so that electric power information can be acquired.

The HEMS controller 83 includes a communication device 85 and is connected to a public network 87 so that the HEMS controller 83 can transmit and receive data to/from external devices. A communication device 88 (e.g., a cell phone, a smartphone, a tablet, a personal computer, or a car navigation system) that is operated by a user is provided so that data can be transmitted between the HEMS controller 83 and the communication device 85. The communication described above may be implemented with wires or wirelessly.

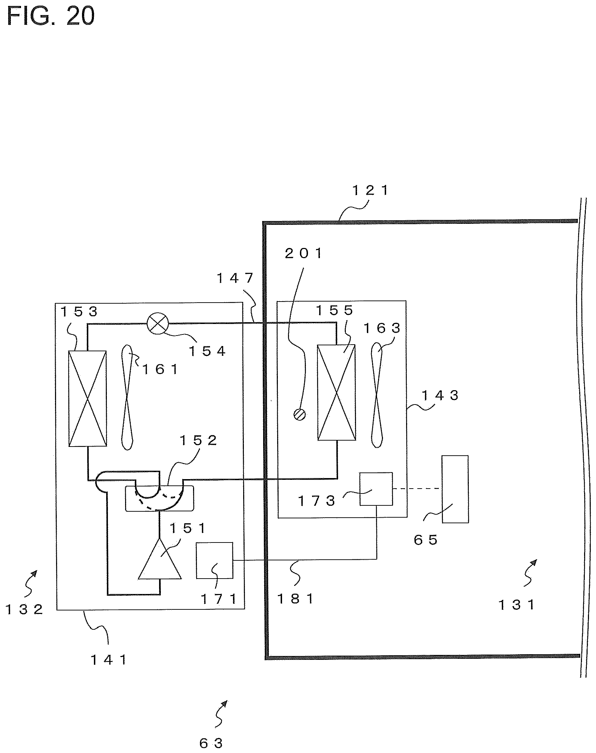

Fig. 20 illustrates an example of a refrigerant circuit configuration of the air-conditioner 63 in Embodiment 1 of the present invention. As illustrated in Fig. 20, the air-conditioner 63 is configured to air-condition an indoor space 131. Thus, the air-conditioner 63 is disposed at a place (e.g., on a wall of the indoor space 131) where an indoor unit 143 constituting the air-conditioner 63 can supply conditioned air to the indoor space 131. The air-conditioner 63 includes an indoor unit 143 and an outdoor unit 141, and cools or heats the indoor space 131 by using cold air or hot air blown from the indoor unit 143. The air-conditioner 63 includes a vapor compression refrigeration cycle. The indoor unit 143 and the outdoor unit 141 are connected to each other by refrigerant pipes 147 in which refrigerant flows and communication lines 181 for communication.

The indoor unit 143 includes an indoor heat exchanger 155. The outdoor unit 141 includes the compressor 151, an outdoor heat exchanger 153, an expansion valve 154, and a four-way valve 152. These components are connected to each other in a loop by the refrigerant pipes 147, thereby constituting a refrigeration cycle. The indoor unit 143 includes an indoor fan 163 that sucks air in the indoor space 131 thereinto, causes the air to pass through the indoor heat exchanger 155, and blows the air to the indoor space 131. The outdoor unit 141 includes an outdoor fan 161 that sucks air in an outdoor space thereinto, causes the air to pass through the outdoor heat exchanger 153, and blows the air to an outdoor space.

The indoor heat exchanger 155 performs heat exchange between cooling/heating energy supplied from refrigerant flowing in the refrigeration cycle and indoor air. The indoor air subjected to heat exchange in the indoor heat exchanger 155 is supplied as conditioned air to the indoor space 131, thereby performing a cooling/heating operation of the indoor space 131. As described above, indoor air is supplied to the indoor heat exchanger 155 by the indoor fan 163.

The compressor 151 compresses low-temperature low-pressure refrigerant into high-temperature high-pressure refrigerant, and is driven by an inverter, and an operation capacity thereof is controlled in accordance with a status of air-conditioning. The outdoor heat exchanger 153 performs heat exchange between cooling/heating energy supplied from refrigerant flowing in the refrigeration cycle and outdoor air. As described above, the outdoor heat exchanger 153 is supplied with outdoor air by the outdoor fan 161. The expansion valve 154 is connected between the indoor heat exchanger 155 and the outdoor heat exchanger 153, and reduces the pressure of refrigerant to expand the refrigerant, and is, for example, an electronic expansion valve whose opening degree is variable. The four-way valve 152 is connected to a discharge side of the compressor 151, and switches a flow of refrigerant in accordance with an operation (a cooling operation or a heating operation) of the air-conditioner 63.

The outdoor unit 141 includes a measurement control device 173 for controlling the air-conditioner 63. The indoor unit 143 includes a room temperature sensor 201 for measuring a temperature of the indoor space 131. Measurement information obtained by the room temperature sensor 201 is input to the measurement control device 173 through the communication lines 181. The communication lines 181 may be wired or wireless.

The measurement control device 173 instructs an operation of the air-conditioner 63 under a previously installed control program based on information and driving information from the room temperature sensor 201 and other sensors (not shown) included in the air-conditioner 63 and information set by a user. The measurement control device 173 is constituted by, for example, a microcomputer that can perform centralized control of the entire air-conditioner 63, and instructs an operation of the air-conditioner 63 by controlling a driving frequency of the compressor 151, a rotation speed of the indoor fan 163, and a rotation speed control of the outdoor fan 161 as well as switching control of the four-way valve 152 and control of an opening degree of the expansion valve 154.

The room temperature sensor 201 is included in the indoor unit 143, and measures a temperature of indoor air sucked in the indoor unit 143. Possible examples of other sensors included in the air-conditioner 63 include a pressure sensor for measuring a pressure of refrigerant discharged from the compressor 151, a pressure sensor for measuring a pressure of refrigerant sucked in the compressor 151, a temperature sensor for measuring a temperature of refrigerant discharged from the compressor 151, a temperature sensor for measuring a temperature of refrigerant to be sucked into the compressor 151, and a temperature sensor for measuring a temperature of outdoor air.

The user issues an operation start instruction to the air-conditioner 63 by operating the remote controller 65, for example. The operation start instruction includes an instruction of setting operation modes such as a cooling operation and a heating operation, and the operation mode is also set in addition to the operation start instruction in the air-conditioner 63.

(Cooling Operation)

A cooling operation of the refrigeration cycle will be described. Refrigerant discharged from the compressor 151 passes through the four-way valve 152 and flows into the outdoor heat exchanger 153. The refrigerant flowed into the outdoor heat exchanger 153 exchanges heat with air to be condensed and liquefied, and flows into the expansion valve 154. The refrigerant is subjected to pressure reduction in the expansion valve 154 and then flows into the indoor heat exchanger 155. The refrigerant flowed into the indoor heat exchanger 155 exchanges heat with air to be evaporated and gasified, and then is sucked into the compressor 151 again through the four-way valve 152. Air is cooled in the indoor heat exchanger 155 by circulating the refrigerant in this manner. The amount of heat exchange between the refrigerant and air in the indoor heat exchanger 155 will be hereinafter referred to as a cooling capacity. The cooling capacity is adjusted by, for example, changing a rotation speed of the compressor 151.

(Heating Operation)

A heating operation of the refrigeration cycle will be described. Refrigerant discharged from the compressor 151 passes through the four-way valve 152 and flows into the indoor heat exchanger 155. The refrigerant flowed into the indoor heat exchanger 155 exchanges heat with air to be condensed and liquefied, and flows into the expansion valve 154. The refrigerant is subjected to pressure reduction in the expansion valve 154 and then flows into the outdoor heat exchanger 153. The refrigerant flowed into the outdoor heat exchanger 153 exchanges heat with air to be evaporated, and then is sucked into the compressor 151 again through the four-way valve 152. Air is heated in the indoor heat exchanger 155 by circulating the refrigerant in this manner. The amount of heat exchange between the refrigerant and air in the indoor heat exchanger 155 will be hereinafter referred to as a heating capacity. The heating capacity is adjusted by, for example, changing a rotation speed of the compressor 151.

(Operation Mode)

The air-conditioning system includes normal control and power saving control. The control is switched by user's selection of on/off of a power saving mode. With the selection of the power saving mode, when an operation start instruction of the air-conditioner 63 is issued, the air-conditioning system is operated under the power saving control. When the power saving mode is selected and an operation is preselected with a timer, the air-conditioner 63 starts at a time specified by the user and operates under power saving control, or the air-conditioner 63 starts operating under power saving control before the specified time in such a manner that a room temperature Ta reaches a target temperature Tm at the specified time (precooling/preheating). Selection of the power saving mode, an operation start instruction, or an operation preselected with a timer may be performed by any one of the remote controller 65, the HEMS controller 83, or the communication device 88. Information processing of control may be performed by any one of the measurement control device 171 of the outdoor unit 141, the measurement control device 173 of the indoor unit 143, the remote controller 65, the HEMS controller 83, the terminal 89, or the communication device 88.

(Operation in Embodiment 1)

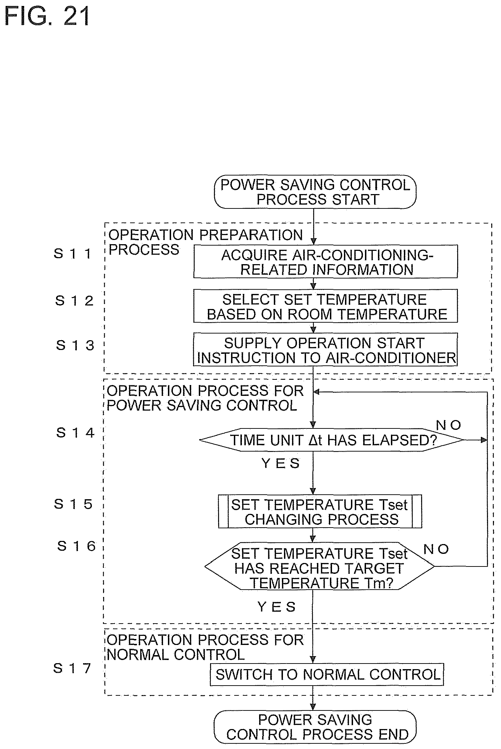

Fig. 21 is a flowchart showing a power saving control process in Embodiment 1 of the present invention.

(Operation Preparation Process)

(Step S11)

The set temperature determination section acquires air-conditioning-related information. The air-conditioning-related information is, for example, information related to air-conditioning, such as a room temperature Ta, an outdoor temperature, a target temperature Tm, device characteristics of the air-conditioner 63, and a specified time input by a user.

(Step S12)

The set temperature determination section sets a set temperature Tset based on the room temperature Ta.

(Step S13)

The set temperature determination section supplies an operation start instruction to the air-conditioner 63.

(Operation Process for Power Saving Control)

(Step S14)

The set temperature determination section determines whether a time unit Δt has elapsed or not. If the time unit Δt has elapsed, the process set temperature determination section proceeds to step S15. On the other hand, if the time unit Δt has not elapsed, the set temperature determination section returns to step S14.

(Step S15)

The set temperature determination section performs a set temperature Tset changing process.

(Step S16)

The set temperature determination section determines whether the set temperature Tset has reached a target temperature Tm or not. If the set temperature Tset has reached the target temperature Tm, the set temperature determination section proceeds to step S17. On the other hand, if the set temperature Tset has not reached the target temperature Tm, the set temperature determination section returns to step S14.

(Operation Process for Normal Control)

(Step S17)

The set temperature determination section switches to normal control, and the process is terminated. In the case of normal control, the set temperature determination section performs an operation in such a manner that a measured value of the room temperature sensor 201 for detecting a representative temperature of the indoor space 131 used as the room temperature Ta by the air-conditioner 63 is equal to a set temperature Tset set by a user.
For example, in a case where the temperature difference between the room temperature Ta and the set temperature Tset is large, the set temperature determination section operates to accelerate convergence to the set temperature Tset by increasing the rotation speed of the compressor 151 and increasing the heating capacity or the cooling capacity of the air-conditioner 63 through the refrigeration cycle controller 5 (proportional control).
In a case where a change of the room temperature Ta with time is small and it takes time for the room temperature to reach the set temperature Tset, the set temperature determination section operates to make the room temperature to reach the set temperature Tset by increasing the rotation speed of the compressor 151 and increasing the heating capacity or the cooling capacity of the air-conditioner 63 through the refrigeration cycle controller 5 (integral control).
In a case where the room temperature Ta rapidly changes because of, for example, opening or closing of a window, the set temperature determination section changes a capacity of the compressor 151 in accordance with a time change through the refrigeration cycle controller 5 (derivative control).
In a case where the room temperature Ta reaches the set temperature Tset, for example, the set temperature determination section stops an operation of the compressor 151 through the refrigeration cycle controller 5 and, when the temperature difference between the room temperature Ta and the set temperature Tset becomes a predetermined value or more, the set temperature determination section starts the compressor 151 again. That is, in normal control, since the temperature difference between the room temperature Ta and the set temperature Tset is large at the start of an operation, the rotation speed of the compressor 151 is high, and the operation efficiency decreases, resulting in an increase in the amount of power consumption.

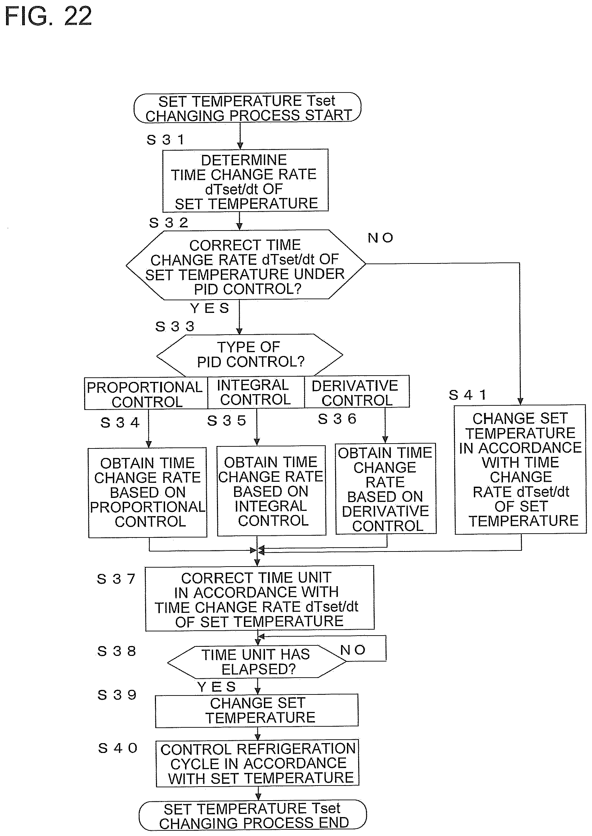

Fig. 22 is a flowchart showing a set temperature Tset changing process in Embodiment 1 of the present invention.

(Step S31)

The set temperature determination section determines a time change rate dTset/dt of the set temperature Tset.

(Step S32)

The set temperature determination section determines whether the time change rate dTset/dt of the set temperature Tset is corrected in PID control or not. If PID control is performed on the time change rate dTset/dt of the set temperature Tset, the set temperature determination section proceeds to step S33. On the other hand, if PID control is not performed on the time change rate dTset/dt of the set temperature Tset, the set temperature determination section proceeds to step S41.

(Step S33)

The set temperature determination section determines the type of PID control. If PID control is proportional control, the set temperature determination section proceeds to step S34. If PID control is integral control, the set temperature determination section proceeds to step S35. If PID control is derivative control, the set temperature determination section proceeds to step S36.

(Step S34)

The set temperature determination section obtains a time change rate based on the proportional control.

(Step S35)

The set temperature determination section obtains a time change rate based on the integral control.

(Step S36)

The set temperature determination section obtains a time change rate based on the derivative control.

(Step S37)

The set temperature determination section corrects a unit amount depending on the time change rate dTset/dt of the set temperature.

(Step S38)

The set temperature determination section determines whether the unit amount has elapsed or not. If the unit amount has elapsed, the set temperature determination section proceeds to step S39. On the other hand, if the unit amount has not elapsed, the set temperature determination section returns to step S38.

(Step S39)

The set temperature determination section changes a set temperature.

(Step S40)

The set temperature determination section controls a refrigeration cycle depending on the set temperature, and the process terminates.

(Step S41)

The set temperature determination section changes the set temperature in accordance with the time change rate dTset/dt of the set temperature.
It is assumed that a time unit $\Delta t$ is corrected as the unit amount. In this case, if the set temperature unit $\Delta$Tset is 1 degree C, the set temperature Tset is increased by 1 degree C in a heating operation, and is reduced by 1 degree C in a cooling operation. In such operations, the set temperature Tset is changed at each time unit $\Delta t$ until the set temperature Tset reaches the target temperature Tm. The set temperature unit $\Delta$Tset is not limited to 1 degree C.

(Power Saving Timer)

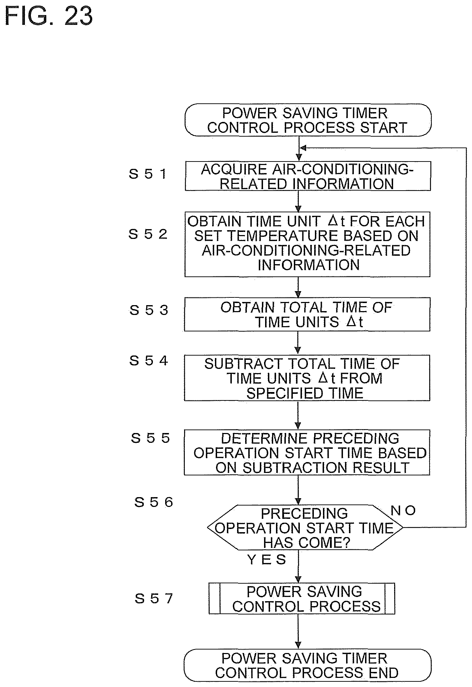

Fig. 23 is a flowchart showing a power saving timer control process of the air-conditioning control apparatus according to Embodiment 1 of the present invention.

(Step S51)

The set temperature determination section acquires air-conditioning-related information. The air-conditioning-related information is, for example, information related to air-conditioning, such as a room temperature Ta, an outdoor temperature, a target temperature Tm, device characteristics of the air-conditioner 63, and a specified time input by a user.

For example, the specified time is generally a time when a user starts staying in a room. For example, the user of the air-conditioner 63 previously sets stay information including a stay start time when the user starts staying in the indoor space 131. Here, the stay information includes, for example, a time when the user starts staying in a room, a time duration in which the user stays in the room, and a time when the user leaves the room. Input and storage of the stay information may be performed by any one of the measurement control device 171 of the outdoor unit 141, the measurement control device 173 of the indoor unit 143, the remote controller 65, the HEMS controller 83, the terminal 89, and the communication device 88, for example.

In actual use of the air-conditioner 63, however, the stay information is expected to change every day. In view of this, the air-conditioning control apparatus may estimate and set stay information by using past information of equipment (e.g., the remote controller 65) placed in the indoor space 131.

For example, in time zones such as morning, daytime, evening, and night, the remote controller 65, for example, may store a time when a user first operated equipment, collect such information every day, and based on the collected information, estimate a stay start time so that the stay start time is supplied to the air-conditioning control apparatus. In a case where a large number of pieces of stay start information are obtained, the air-conditioning control apparatus may determine a stay start time based on an average value of the stay start information, for example.

As described above, instead of collecting an operation history of the remote controller 65 as stay detecting means, the HEMS controller 83 may collect, for stay detection, use information of the terminal 89, the IH cooking heater 91, the range grill 93, the lighting fixture 95, or a television receiver (not shown) included in the indoor space 131, for example.

The air-conditioning control apparatus may analyze power consumption of the power consumption measuring instrument 81 and use the result for stay detection. The air-conditioning control apparatus may use, for stay detection, human detection information obtained by, for example, a human detection sensor 205 using infrared radiation or other means provided in the air-conditioner 64 or other equipment or open/close information on a room door (not shown) provided in the indoor space 131.

As a method for acquiring stay start time or a method for determining a precooling/preheating start time, the air-conditioning control apparatus may use the communication device 85 so that such a time is downloaded to the HEMS controller 83 or other equipment from the outside through the public network 87.

(Step S52)

The set temperature determination section obtains a time unit $\Delta t$ for each set temperature Tset based on air-conditioning-related information.

(Step S53)

The set temperature determination section obtains a total time of time units $\Delta t$.

(Step S54)

The set temperature determination section subtracts the total time of time units $\Delta t$ from the specified time.

(Step S55)

The set temperature determination section determines a preceding operation start time based on a result of the subtraction. The preceding operation start time is, for example, a precooling start time. The preceding operation start time is, for example, a preheating start time.

(Step S56)

The set temperature determination section determines whether the preceding operation start time has come or not. If the preceding operation start time has come, the set temperature determination section proceeds to a power saving control process. On the other hand, if the preceding operation start time has not come, the set temperature determination section returns to step S51.

(Step S57)

The set temperature determination section performs the power saving control process described above through the refrigeration cycle controller 5, and the process terminates. In the foregoing description, the set temperature determination section obtains the preceding operation start time based on the air-conditioning-related information. However, the present invention is not limited to this. For example, the preceding operation start time may be set by a user.

(Advantages of Embodiment 1)

As described above, the set temperature determination section corrects a time change rate of a set time during preceding operation so that the room temperature can reach the target temperature Tm at the specified time.

This will be specifically described. Until the room temperature Ta reaches the target temperature Tm from start of an operation, the set temperature determination section performs power saving control while changing the set temperature Tset so that power consumption can be reduced. In a case where the room temperature Ta changes slowly, the set temperature determination section performs correction control of the time change rate of the set temperature Tset based on the temperature difference between the room temperature Ta and the set temperature Tset or the time change rate of the room temperature Ta so that the room temperature Ta can reach the target temperature Tm earlier and comfort can be enhanced. That is, in the case of considering a change of the room temperature Ta, the set temperature determination section performs correction control on the time change rate of the set temperature Tset using the room temperature Ta so that comfort is enhanced.

The set temperature determination section controls the time change rate of the set temperature Tset based on the temperature difference between the room temperature Ta and the expected room temperature Tp. Thus, the set temperature determination section can control the room temperature Ta appropriately even after correction of the set temperature Tset so that power saving and comfort can be enhanced. That is, in a case where the temperature difference between the room temperature Ta and the set temperature Tset increases, correction control might continue longer than necessary. However, the use of the temperature difference between the room temperature Ta and the expected room temperature Tp enables the air-conditioning control apparatus to converge correction control relatively early.

The set temperature determination section controls the time change rate of the set temperature Tset based on the temperature difference between the room temperature Ta and the target temperature Tm and the time difference between the completion time and the current time so that the set temperature Tset can be changed more greatly as the remaining time to the completion time decreases. Thus, the set temperature determination section can reduce the time necessary for the room temperature Ta to reach the target temperature Tm so that comfort can be enhanced. That is, the set temperature determination section controls the time change rate of the set temperature Tset based on an expected temperature glide x from the current time to the completion time so that control can be performed in consideration of an expected control remaining time.

In a case where the set temperature Tset reaches the target temperature Tm under power saving control, the set temperature determination section switches to the normal control through the refrigeration cycle controller 5 so that an operation can be performed at optimum operating points before the room temperature Ta reaches the target temperature Tm and after the room temperature Ta has reached the target temperature Tm. Thus, the amount of power consumption can be reduced. Specifically, the set temperature determination section only needs to exhibit a capacity larger than a heat load D before the room temperature Ta reaches the target temperature Tm and to exhibit a capacity substantially equal to the heat load D after the room temperature Ta has reached the target temperature Tm, through the refrigeration cycle controller 5. Thus, an operation is performed at different operating points at these points of time. In view of this, the set temperature determination section switches the type of control from power saving control to normal control using the set temperature Tset through the refrigeration cycle controller 5 at an appropriate timing in consideration of the heat load D so that the compressor 151 can be operated in a range from a low capacity to an intermediate capacity. Thus, the operation efficiency of the air-conditioner 63 can be enhanced, and power-saved operation can be performed with a small amount of power consumption.

In a case where an operation preselected with a timer for performing power saving control is performed before a time set by a user, such as a specified time, the set temperature determination section can previously operate a heating/cooling operation so that comfort felt by a user when the user enters a room can be enhanced.

In the HEMS 51, the set temperature determination section performs power saving control of the air-conditioner 63 except for a time zone in which many of other home electric appliances are used, through the refrigeration cycle controller 5 so that a peak of power consumption in the entire home can be leveled out, and the obtained power saving can contribute to alleviating a social power shortage. The set temperature determination section also levels electric power through the refrigeration cycle controller 5 in a case where electricity of the photovoltaic array 75 or the storage battery 101 is supplied to home electric appliances, and thus, the electricity can be efficiently distributed to be used.

In a case where the air-conditioner 63 is controlled by an external control device such as the HEMS controller 83 through the refrigeration cycle controller 5, the set temperature determination section controls an instruction of the set temperature Tset more easily than an instruction of the compressor rotation speed, and is easily applicable to an existing air-conditioner 63.

As described above, in Embodiment 1, an air-conditioning control apparatus that controls an air-conditioner 63 and performs a preceding operation of previously starting the air-conditioner 63 for precooling or preheating, includes: a set temperature determination section configured to determine a predetermined time during which a current set temperature continues and a subsequent set temperature; and a refrigeration cycle controller 5 configured to control the air-conditioner 63 based on the current set temperature, wherein the set temperature determination section obtains a time change rate of a set temperature based on a current room temperature, and obtains the predetermined time and the subsequent set temperature based on the current set temperature and the time change rate of the set temperature.

In Embodiment 1, the set temperature determination section increases the time change rate of the set temperature as a temperature difference between the current set temperature and the current room temperature increases.

In Embodiment 1, the set temperature determination section increases the time change rate of the set temperature as a temperature difference between an expected room temperature and the current room temperature increases.

In Embodiment 1, the set temperature determination section increases the time change rate of the set temperature as a time change rate of the current room temperature increases.

In Embodiment 1, the set temperature determination section increases the time change rate of the set temperature as a temperature glide obtained based on a temperature difference between a target temperature and the current room temperature and a time difference between a specified time and a current time increases.

In Embodiment 1, the set temperature determination section terminates the preceding operation when the current set temperature reaches a target temperature.

In Embodiment 1, the refrigeration cycle controller 5 starts the air-conditioner 63 before a specified time.

Thus, in particular, the air-conditioning control apparatus corrects the time change rate of the set time in the preceding operation so that the room temperature can reach the target temperature Tm at the specified time.

Embodiment 2

(Different Aspects)

The Embodiment 2 is different from other embodiments in that in an operation process for power saving, determination of termination of power saving control is performed depending on a predetermined time such as a completion time.

(Operation in Embodiment 2)

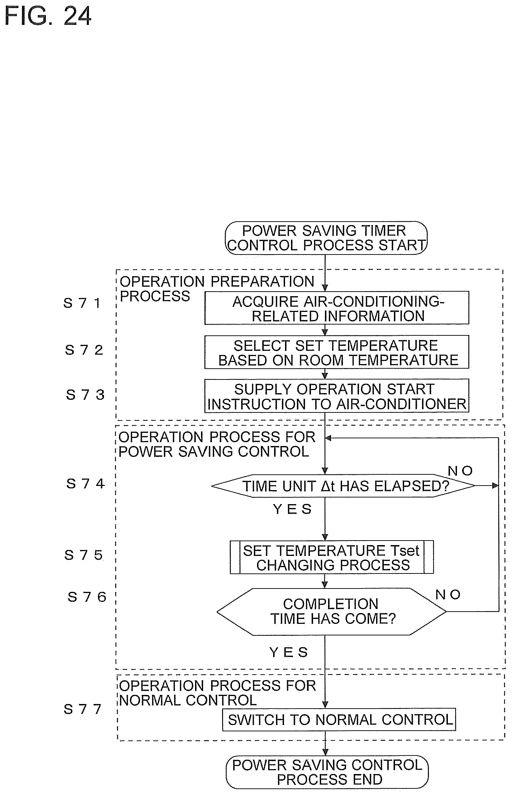

Fig. 24 is a flowchart showing a power saving control process of an air-conditioning control apparatus according to Embodiment 2 of the present invention. In Embodiment 2, only the operation process for power saving, which is a main feature, will be described.

(Operation Process for Power Saving)

(Step S74)

The air-conditioning control apparatus determines whether a time unit $\Delta t$ has elapsed or not. If the time unit $\Delta t$ has elapsed, the air-conditioning control apparatus proceeds to step S75. On the other hand, if the time unit $\Delta t$ has not elapsed, the air-conditioning control apparatus returns to step S74.

(Step S75)

The air-conditioning control apparatus performs a set temperature Tset changing process.

(Step S76)

The air-conditioning control apparatus determines whether a completion time has come or not. If the completion time has come, the air-conditioning control apparatus proceeds to an operation process for normal control in step S77. On the other hand, if the completion time has not come, the air-conditioning control apparatus returns to step S74.

(Advantages of Embodiment 2)

As described above, in Embodiment 2, if a predetermined time has elapsed, the set temperature determination section terminates the preceding operation.

Thus, the air-conditioning control apparatus can control termination of the preceding operation in accordance with a predetermined time such as the completion time.

Embodiment 3

(Different Aspects)

Embodiment 3 is different from other embodiments in that a detection result of an infrared radiation sensor 203 is converted to a room temperature Ta.

(Configuration of Embodiment 3)

(Use of Infrared Radiation Sensor 203)

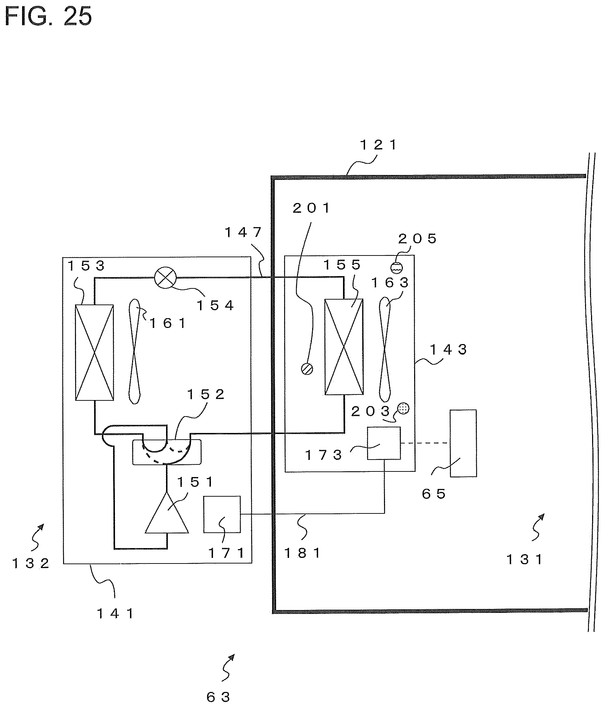

Fig. 25 illustrates an example configuration of arrangement of the infrared radiation sensor 203 included in an air-conditioner 63 in Embodiment 3 of the present invention. As illustrated in Fig. 25, an indoor unit 143 includes the infrared radiation sensor 203. The infrared radiation sensor 203 detects an ambient radiation temperature, and supplies a detection result to, for example, a measurement control device 173.

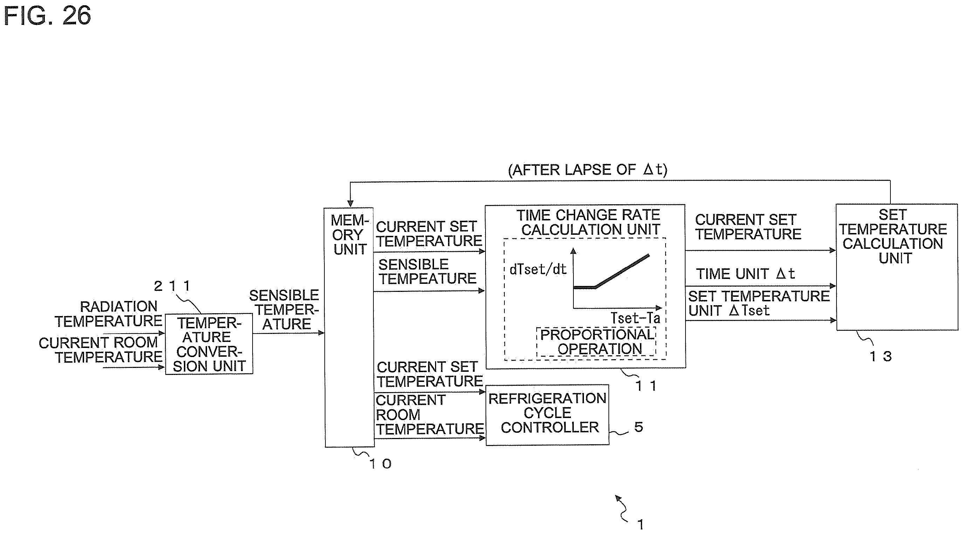

Fig. 26 illustrates an air-conditioning control apparatus that converts a detection result of the infrared radiation sensor 203 in Embodiment 3 of the present invention. As illustrated in Fig. 26, the air-conditioning control apparatus includes a temperature conversion unit 211. The temperature conversion unit 211 converts a radiation temperature supplied from the infrared radiation sensor 203 and supplies a result of the conversion to the air-conditioning control apparatus.

(Operation in Embodiment 3)

In the example described above, the air-conditioning control apparatus uses a temperature of a target indoor space 131, that is, a temperature measured by a room temperature sensor 201, is used, for example, as a room temperature for use in the air-conditioner 63. However, the present invention is not specifically limited to this example. For example, the air-conditioning control apparatus may use, as a room temperature to be used by the air-conditioner 63, a temperature of a frame of the indoor space 131 detected by a sensor for measuring a radiation temperature, such as the infrared radiation sensor 203 included in the air-conditioner 64. The air-conditioning control apparatus uses a temperature of the frame as a room temperature to be used by the air-conditioner 63 so that control can be performed in consideration of the amount of heat of the frame.

(Advantages of Embodiment 3)

As described above, in Embodiment 3, in the air-conditioning control apparatus, the infrared radiation sensor 203 is included in the indoor unit 143, the infrared radiation sensor 203 detects a radiation temperature of the indoor unit 143, and the temperature conversion unit 211 for converting a radiation temperature to a current room temperature Ta is additionally provided.

Thus, in performing power saving control, a load of heat necessary for cooling the frame of the indoor space 131 to a set temperature Tset is larger than a load due to heat entering from the outside. Thus, to appropriately obtain power saving control, it is important for the air-conditioning control apparatus to determine whether the amount of heat of the frame is processed or not.

Specifically, in a case where a temperature of the indoor air is a criterion for determination, since the temperature of indoor air has a heat capacity smaller than that of the frame, responsiveness of an air-conditioning operation quickly appears, and it might be determined that the indoor space 131 might be erroneously determined to be sufficiently cooled although the frame is still at a high temperature. In view of this, the air-conditioning control apparatus can achieve an operation with greater comfort by performing power saving control using a frame temperature as the set temperature Tset.

Embodiment 4

(Different Aspects)

Embodiment 4 is different from other embodiments in limiting a target temperature Tm.

(Configuration of Embodiment 4)

(Temperature Limitation)

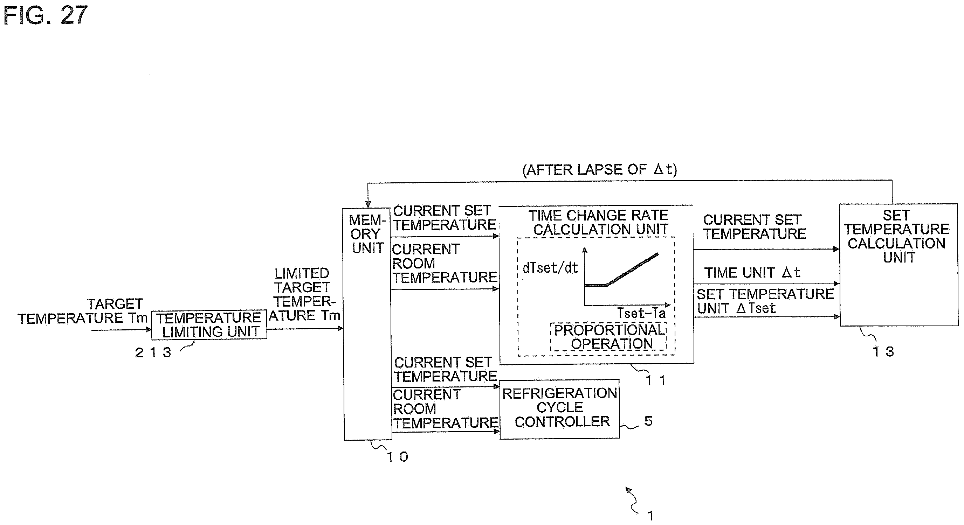

Fig. 27 illustrates an air-conditioning control apparatus that limits a target temperature Tm in Embodiment 4 of the present invention. As illustrated in Fig. 27, the air-conditioning control apparatus includes a temperature limiting unit 213. The temperature limiting unit 213 limits a target temperature Tm.

(Operation of Embodiment 4)

In performing power saving control, the air-conditioning control apparatus may narrow the range between the upper and lower limits of the target temperature Tm, as compared to an operable range of a remote controller 65. In the case of a cooling operation, for example, the air-conditioning control apparatus limits the target temperature Tm of power saving control to 25 to 28 degrees C even if the range from 16 to 30 degrees C can be selected as a range of the set temperature Tset of the remote controller 65. In the case of a heating operation, the air-conditioning control apparatus limits the target temperature Tm of power saving control to 19 to 22 degrees C even if the range from 16 to 30 degrees C can be selected as a range of the set temperature Tset of the remote controller 65.

In a case where the air-conditioner 63 operates under power saving control through a communication device 88, the air-conditioning control apparatus may narrow the range between the upper and lower limits of the target temperature Tm, as compared to an operable range of the remote controller 65. In the case of a cooling operation, for example, the air-conditioning control apparatus limits the target temperature Tm of the power saving control to the range from 25 to 28 degrees C even if the range from 16 to 30 degrees C can be selected as a range of the set temperature Tset of the remote controller 65. In the case of a heating operation, the air-conditioning control apparatus limits the target temperature Tm of the power saving control to 19 to 22 degrees C even if the range from 16 to 30 degrees C can be selected as the range of the set temperature Tset of the remote controller 65.

(Advantages of Embodiment 4)

As described above, in Embodiment 4, the air-conditioning control apparatus further includes the temperature limiting unit 213 for limiting the target temperature Tm.
Thus, in the air-conditioning control apparatus, in a case where a person such as a sleeping person or an infant who cannot operate a remote controller is in an air-conditioned area, if a timer operation automatically starts, the person might be taken ill because of heat or cold. In view of this, the air-conditioning control apparatus limits the range of the target temperature Tm to reduce the risk of falling ill. The air-conditioning control apparatus also prevents excessive cooling or heating so that energy saving performance can be enhanced.
In a case where a person such as a sleeping person or an infant who cannot operate a remote controller is in an air-conditioned area, the person might be taken ill because of heat or cold unless an operation is not performed remotely. In view of this, the air-conditioning control apparatus limits the range of the target temperature Tm to reduce the risk of falling ill. The air-conditioning control apparatus also prevents excessive cooling or heating so that energy saving performance can be enhanced.

Embodiment 5

(Different Aspects)

Embodiment 5 is different from other embodiments in limiting a current supplied to an air-conditioner 63 that is a target of control of a refrigeration cycle controller 5.

(Configuration of Embodiment 5)

(Current Limitation)

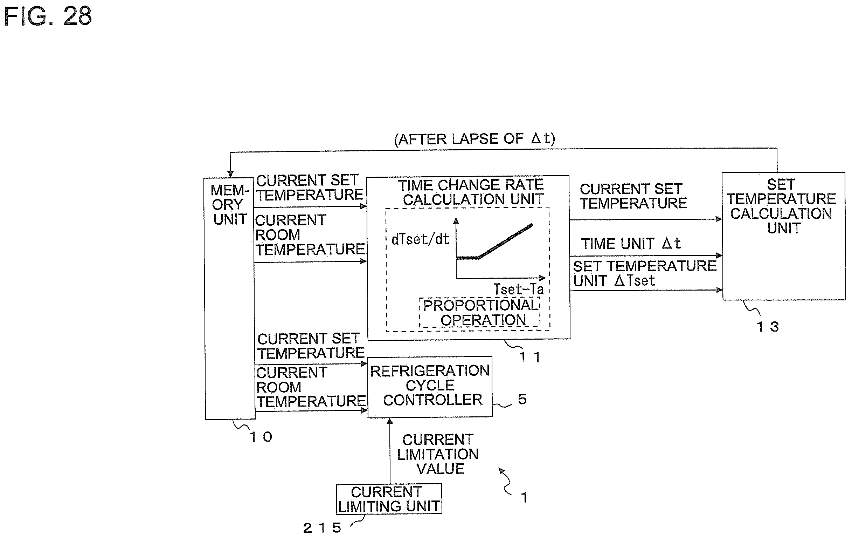

Fig. 28 illustrates an air-conditioning control apparatus that limits a current in Embodiment 5 of the present invention. As illustrated in Fig. 28, the air-conditioning control apparatus includes a current limiting unit 215. The current limiting unit 215 limits a current that is to flow in an air-conditioner 63 through a refrigeration cycle controller 5.

(Operation of Embodiment 5)

In performing power saving control, the air-conditioning control apparatus may have several stages of current limitation values. In a case where the air-conditioner 63 or a HEMS controller 83 is set in a power-saving mode, the air-conditioning control apparatus may have a current limitation value. Here, in the air-conditioner 63, power consumption accounts for about 80 to 90% in a compressor 151, about 5 to 10% in an indoor fan 163, and about 5 to 10% in an outdoor fan 161. Thus, in a case where a current in the air-conditioner 63 is limited, the air-conditioning control apparatus needs to decrease an operation capacity by reducing a rotation speed of the compressor 151 or to reduce an airflow rate by reducing a rotation speed of the indoor fan 163 or the outdoor fan 161.

It is assumed that the current limitation value is 100% in the absence of a current limitation, and may be expressed as an absolute value (%), such as a current limitation value of 70%, and more specifically, may be expressed as an absolute value such as a current limitation value of 3A (amperes).

In a case where the air-conditioner 63 or the HEMS controller 83 is set in a power-saving mode, if the current limitation value is 70%, for example, the air-conditioning control apparatus limits the upper limit of the rotation speed of the compressor 151 to 70% of the maximum rotation speed, or limit a rotation speed of the indoor fan 163 or the outdoor fan 161 to 70% of the maximum rotation speed.

In a case where the current limitation value is 3A, if an operating current without limitation is 5A, the air-conditioning control apparatus may limit the upper limit of the rotation speed of the compressor 151 to 3/5 of the maximum rotation speed or may limit the rotation speed of the indoor fan 163 or the outdoor fan 161 to 3/5 of the maximum rotation speed. In general, an operating current without limitation is indicated for each type of devices.

In the above description, a criterion (100%) without a current limitation is the maximum value of the compressor rotation speed or the maximum value of the rotation speed of an air-sending device such as the indoor fan 163 or the outdoor fan 161. However, the present invention is not limited to this. For example, the criterion (100%) without a current limitation may be limited with reference to the compressor rotation speed or the air-sending device rotation speed in a normal operation.

For example, in a case where there is no current limitation, if a compressor rotation speed in a normal control is supposed to 50 rotations per second (rps), the compressor rotation speed is 35 rps at a current limitation value of 70%. If the indoor air-sending device in a normal control in the case where there is no current limitation is expected to be at a rotation speed of 1000 rpm, the rotation speed is 700 rpm at a current limitation value of 70%.

(Advantages of Embodiment 5)

As described above, in Embodiment 5, the air-conditioning control apparatus further includes the current limiting unit 215 for limiting a current for operating the air-conditioner 63.

In view of this, in the air-conditioning control apparatus, an intension of a user can be more effectively reflected on control by limiting a current so that power consumption can be reduced as intended, resulting in enhanced power saving performance.

In addition, in the air-conditioning control apparatus, the limitation on a current can enhance safety and power saving performance in remote operation control.

Embodiment 6

(Different Aspects)

Embodiment 6 is different from other embodiments in that a communication unit 217 for issuing a notification or an operation permission request to a user is provided.

(Configuration of Embodiment 6)

(Notification of Automatic Operation)

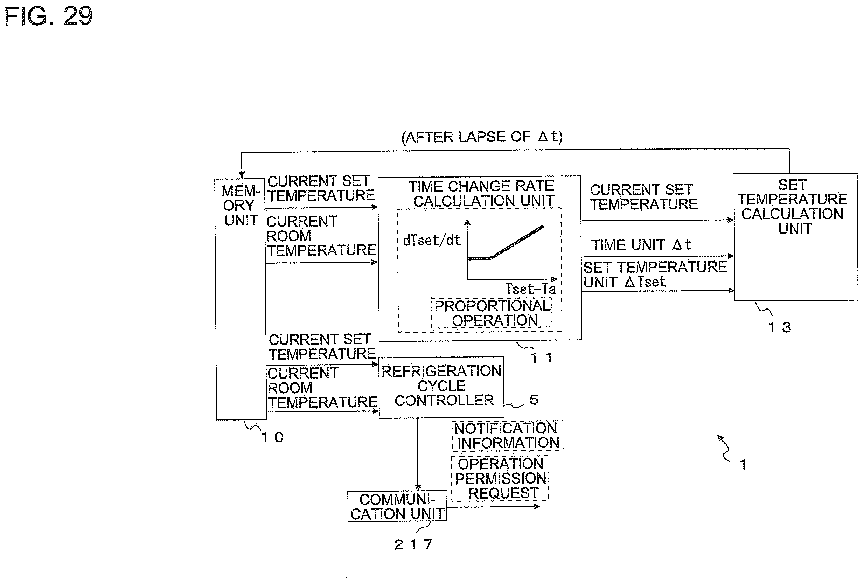

Fig. 29 illustrates an air-conditioning control apparatus that issues a notification or an operation permission request in Embodiment 6 of the present invention. As illustrated in Fig. 29, the air-conditioning control apparatus includes the communication unit 217. The communication unit 217 can supply notification information to a user or supply an operation permission request to a user, before a refrigeration cycle controller 5 starts controlling an air-conditioner 63.

(Operation of Embodiment 6)

The air-conditioning control apparatus may be a system that issues a notification of operation start or a request for operation permission to a user in starting power saving timer control. For example, when a precooling control start time comes, devices such as a HEMS controller 83 sends, for example, an e-mail to a communication device 88 such as a cell phone, a smartphone, a terminal 89, or a car navigation system used by a user, through a communication device 85 and a public network 87, and notifies the user of operation start. Alternatively, the air-conditioning control apparatus may request a user to press a permission button on the communication device 88 to start operation.

(Advantages of Embodiment 6)

As described above, in Embodiment 6, the air-conditioning control apparatus further includes the communication unit 217 that issues notification information or a communication permission request before the refrigeration cycle controller 5 controls the air-conditioner 63.
Thus, in an operation preselected with a timer, since a user is absent, the status of the air-conditioner 63 cannot be confirmed, which causes feelings of anxiety. In view of this, the air-conditioning control apparatus includes confirmation means such as the communication unit 217 before start, thereby enhancing safety. Since the air-conditioning control apparatus can avoid an operation of the air-conditioner 63 even when a user returns home at a different time than usual, unnecessary power consumption can be prevented so that power saving performance can be enhanced.

Embodiment 7

(Different Aspects)

Embodiment 7 is different from other embodiments in that a presence detection unit 219 for determining the presence of a person in a room is provided.

(Operation of Embodiment 7)

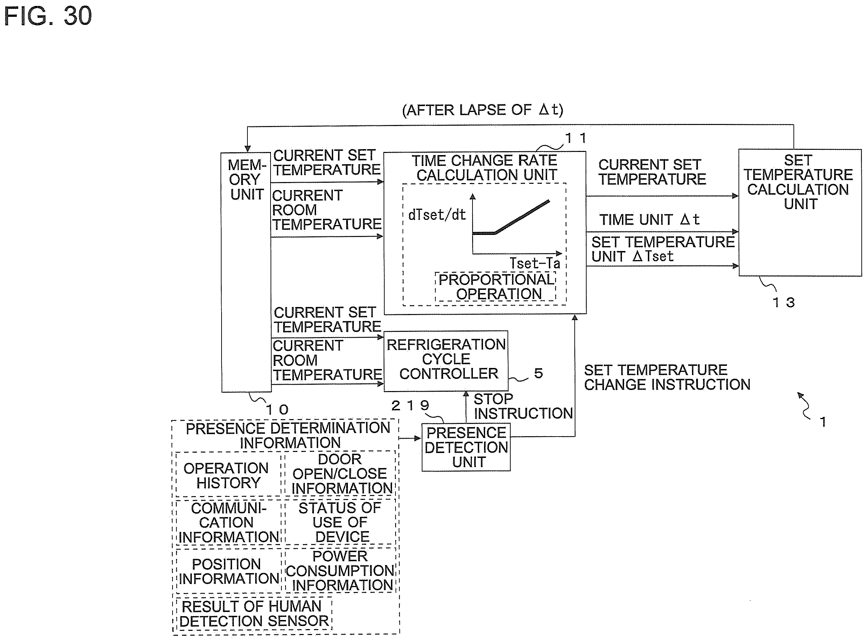

Fig. 30 illustrates an air-conditioning control apparatus that performs a presence detection operation in Embodiment 7 of the present invention. As illustrated in Fig. 30, the air-conditioning control apparatus includes the presence detection unit 219. The presence detection unit 219 determines whether a person is present or not based on presence determination information. If it is determined that a present is absent, the presence detection unit 219 supplies a set temperature change instruction to a set temperature determination section 2, or alternatively, supplies a stop instruction of an air-conditioner 63 to the refrigeration cycle controller 5.

(Operation of Embodiment 7)

(In a case where a user does not return home)

In a case where the presence (homecoming) of a user is not detected after a lapse of a predetermined time since an operation of power saving timer control started, the air-conditioning control apparatus changes a set temperature Tset or stops the air-conditioner 63.
To detect the presence of a person, the air-conditioning control apparatus may use human detection information obtained by, for example, a human detection sensor 205 using an infrared radiation or other means included in the air-conditioner 63, an indoor space 131, or other places, may detect the presence of a person based on an input operation with a remote controller 65, or may collect use information of a terminal 89, an IH cooking heater 91, a range grill 93, a lighting fixture 95, or a television receiver (not shown), for example, included in the indoor space 131 by a HEMS controller 83 to use the collected information for the presence detection.

The air-conditioning control apparatus may analyze power consumption of a power consumption measuring instrument 81 so that a result of the analysis is used for presence detection. The air-conditioning control apparatus may use open/close information of a door or a window (not shown) attached to the indoor space 131 for presence detection. The air-conditioning control apparatus may use information (the presence/absence of connection of Wi-Fi (registered trademark) or position information of a GPS) of a communication device 88 such as a cell phone, a smartphone, a terminal 89, or a car navigation system used by a user for presence determination, and may detect a homecoming with a camera of an intercom (not shown).

In the air-conditioning control apparatus, a set temperature Tset in a case where a person is absent after a lapse of a predetermined time may be fixed at a specific temperature. As compared to an original target temperature Tm, the set temperature Tset may be higher than a target temperature Tm by 2 degrees C in the case of a cooling operation while being lower than the target temperature Tm by 2 degrees C in the case of a heating operation.

(Remote Operation)

An example in which the air-conditioning control apparatus performs power saving control remotely by using the communication device 88 will be described. Part of the example already described in Embodiment 1 will not be repeated.

A user has a communication device 88 such as a cell phone, a smartphone, a tablet, a terminal 89, or a car navigation system, and when data is transmitted from the communication device 88, which may be disposed in or outside the house, through the public network 87, the data is received by a communication device 85, is transmitted to a HEMS controller 83, is sent again from the HEMS controller 83 when necessary, and is returned to the communication device 88 through the communication device 85. Thus, in a manner similar to a case where the HEMS controller 83 is directly manually operated, information in the HEMS 51 can be remotely acquired and an operation instruction can be issued remotely.

Thus, the air-conditioning control apparatus can transmit an operation instruction to home electric appliances such as the air-conditioner 63, the terminal 89, the IH cooking heater 91, the range grill 93, and the lighting fixture 95 from the communication device 88 such as a cell phone, a smartphone, the terminal 89, or a car navigation system, can receive operation information on home electric appliances such as the air-conditioner 63, the terminal 89, the IH cooking heater 91, the range grill 93, and the lighting fixture 95, and can receive electric power information on a power conditioner 73 or the power consumption measuring instrument 81.

For example, it is assumed that the air-conditioning control apparatus is installed in a smartphone. In this case, a user can instruct, through a screen of the smartphone, an operation similar to that with the remote controller 65, such as an instruction of an operation or stopping of the air-conditioner 63, selection of an operation mode such as cooling, heating, air blowing, and dehumidification, or a change of a set temperature Tset, an airflow rate, and a wind direction.

For example, it is assumed that the air-conditioning control apparatus is installed in a cell phone. In this case, the user can confirm a status (an operation mode such as operation or stop, cooling, heating, air blowing, or dehumidification, a set temperature Tset, an airflow rate, and a wind direction) of the air-conditioner 63 through a screen of the smartphone, or check an air-conditioning information such as an intake air temperature (room temperature), a room humidity, and an outdoor-air temperature measured by the air-conditioner 63.

Thus, the user can see the status of the air-conditioner 63 to make determinations as followings. Specifically, when the air-conditioner 63 is already in operation, the user can recognize that another person in the family uses the air-conditioner 63 and, thus, stops a remote operation. If the user sees that the room temperature exceeds 30 degrees C in the air-conditioning information, the user remotely starts a cooling operation.

The air-conditioning control apparatus can select a power saving mode to immediately start air-conditioning through the communication device 88, change a stay start time (homecoming time) of a power saving timer through the communication device 88, and issue an instruction of a precooling/preheating start time. The air-conditioning control apparatus may automatically determine a precooling/preheating control start time, that is, a preceding operation start time, by comparing current location information obtained by a GPS of the communication device 88 and position information on a house. For example, it is assumed that an operation instruction is issued through the communication device 88 such as a car navigation system or a cell phone. In this case, if the current location is 30 km away from a house and an expected arrival time is one hour later, the air-conditioning control apparatus does not perform power saving control (does not perform a cooling operation) immediately, and when the distance between the current location and the home reaches within a predetermined distance or when the expected arrival time reaches within the predetermined time, the air-conditioning control apparatus starts power saving control. Here, in a case where an optimum precooling/preheating time period automatically obtained from, for example, the target temperature Tm, the room temperature Ta, and the outdoor temperature of the air-conditioner 63 is 20 minutes, for example, power saving control starts when the expected arrival time reaches 20 minutes.

(Advantages of Embodiment 7)

As described above, in Embodiment 7, the air-conditioning control apparatus further includes the presence detection unit 219 for determining whether a person is present or not based on presence determination information. In a case where the absence of a person is detected after a lapse of a predetermined time since the air-conditioner 63 started, the presence detection unit 219 either supplies an instruction of changing a set temperature Tset at the current time to the set temperature determination section 2 or supplies a stop instruction of stopping the air-conditioner 63 to the refrigeration cycle controller 5.

Thus, in a case where the presence (homecoming) of a user is not detected after a lapse of a predetermined time since an operation of power saving timer control started, the air-conditioning control apparatus changes the set temperature Tset or stops the air-conditioner so that unnecessary operation in the absence of a user can be avoided even in a case where the user returns home much later than scheduled because of an urgent business, resulting in reduction of the amount of power consumption.

In Embodiment 7, the presence detection unit 219 of the air-conditioning control apparatus detects whether a person is present or not depending on one of an operation history of the remote controller 65 for controlling the air-conditioner 63, a status of use of devices, power consumption information, a detection result of a human detection sensor, door open/close information, communication information, or position information.

When the communication device 88 is allowed to remotely operate the air-conditioner 63, the air-conditioning control apparatus can start operation before a user returns home so that a room is at a comfortable temperature when the user returns home, and thus, comfort can be enhanced. Accordingly, the air-conditioning control apparatus can start an operation at an appropriate time even in a case where the homecoming time varies every day, and thus, convenience is enhanced as compared to an operation reserved with the remote controller 65, and an unnecessary operation in the absence of a user can be avoided so that the amount of power consumption can be reduced.

In a case where a person who is not familiar with an operation of the air-conditioner 63 or a user is out leaving a pet at home, an indoor environment can be controlled by a remote operation so that convenience can be enhanced. Since the status of the air-conditioner 63 and air-conditioning information can be monitored with the communication device 88, the air-conditioning control apparatus can use a result of the monitoring as a criterion for a remote operation so that convenience can be enhanced. Since the air-conditioning control apparatus can automatically determine whether to start precooling control based on position information, convenience can be further enhanced, and an unnecessary operation in the absence of a user can be avoided so that the amount of power consumption can be reduced.

Embodiment 8

(Different Aspects)

Embodiment 8 is different from other embodiments in that an air-conditioner 63 is selected based on an operation history.

(Configuration of Embodiment 8)

(Method of Selecting Air-conditioner)

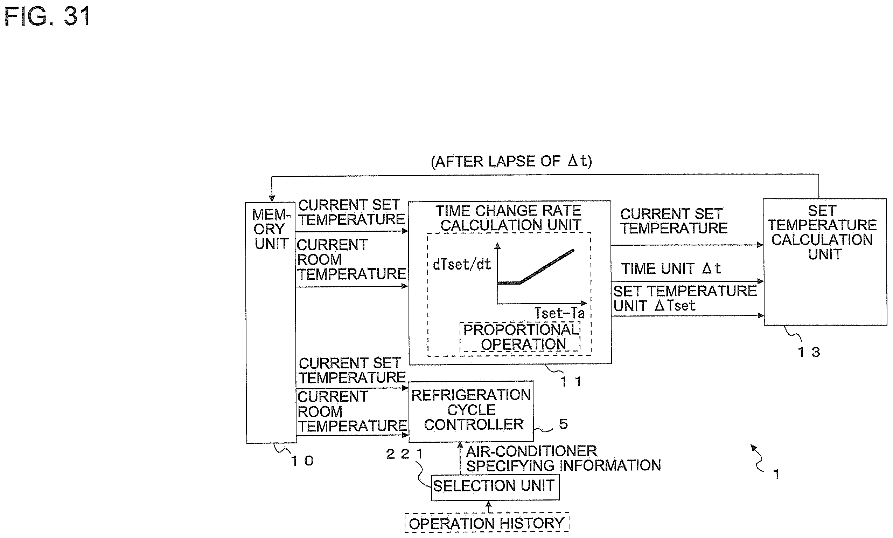

Fig. 31 illustrates an air-conditioning control apparatus that selects an air-conditioner 63 to be controlled based on an operation history in Embodiment 8 of the present invention. As illustrated in Fig. 31, the air-conditioning control apparatus includes a selection unit 221. The selection unit 221 supplies air-conditioner specifying information to a refrigeration cycle controller 5 based on an operation history.

(Operation of Embodiment 8)

In a case where a HEMS 51 includes a plurality of air-conditioners 63, it is necessary to select one or more of the air-conditioners 63 as a target of operation to issue an operation instruction from a communication device 88. In the air-conditioning control apparatus, software for an operation instruction includes a button and a selection display screen, for example, for selecting one of the air-conditioners 63. Thus, the air-conditioning control apparatus may be configured such that at least one of the air-conditioners 63 is once selected is stored so that this air-conditioner 63 is automatically selected as a target of an operation for a next operation. Alternatively, an air-conditioner 63 as a target of an operation may be fixed and registered in advance for each communication device 88. Information on a combination of the communication device 88 and the air-conditioner 63 may be stored in the HEMS controller 83 or in the communication device 88.

(Advantages of Embodiment 8)

As described above, in Embodiment 8, in a case where a plurality of air-conditioners 63 are provided, the air-conditioning control apparatus further includes the selection unit 221 for selecting at least one of the air-conditioners 63 as a target of control of a preceding operation depending on operation histories of the air-conditioners 63.
Thus, in a case where the HEMS 51 includes a plurality of air-conditioners 63, arbitrary selection of an operation target with the communication device 88 can enhance flexibility in application. In a case where an operation target is automatically determined among the air-conditioners 63, the target does not need to be selected for each operation so that flexibility in application can be enhanced.

Embodiment 9

(Different Aspects)

Embodiment 9 is different from other embodiments in that an air-conditioner 63 is selected depending on a life pattern.

(Configuration of Embodiment 9)

(Method of Selecting Air-conditioner)

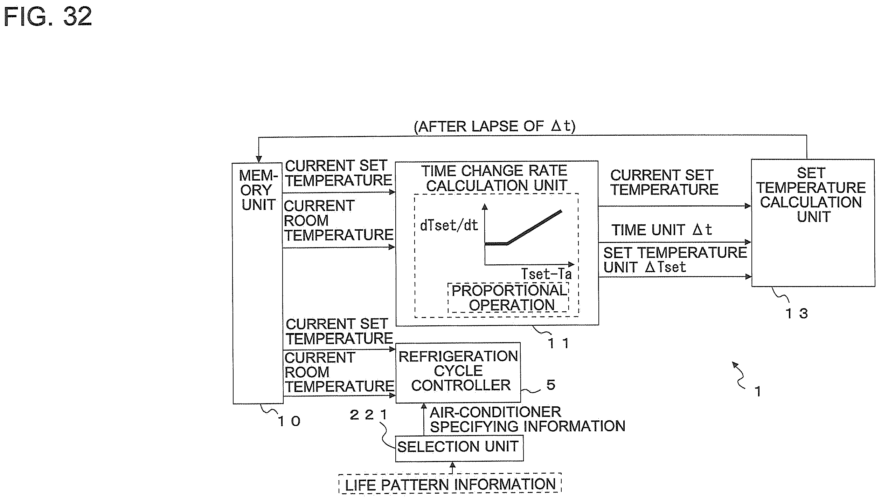

Fig. 32 illustrates an air-conditioning control apparatus that performs a process of selecting an air-conditioner 63 as a control target based on life pattern information in Embodiment 9 of the present invention. As illustrated in Fig. 32, the air-conditioning control apparatus includes a selection unit 221. The selection unit 221 supplies air-conditioner specifying information to a refrigeration cycle controller 5 based on life pattern information.

(Operation of Embodiment 9)

In the air-conditioning control apparatus, a life pattern after a homecoming may be stored in the HEMS controller 83 everyday so that when an operation instruction is issued from a communication device 88 such as a cell phone, a personal computer, or a car navigation system, an air-conditioner 63 can be automatically selected depending on the life patterns.
Examples of life patterns include cooking, eating, watching television, bathing, sleeping, operating a personal computer, and reading. Depending on these life patterns, the air-conditioning control apparatus selects one of a kitchen, a dining room, a living room, a bath room, a bed room, or a study room as an operation target of the air-conditioner 63.
In a case where there are a plurality of users, the air-conditioning control apparatus stores life patterns for each user and specifies a user based on identification of the communication device 88 for control. To detect that a user returns home by the HEMS controller 83, a homecoming of a user is determined based on information (the presence/absence of connection of Wi-Fi (registered trademark) or position information of a GPS) from a cell phone is used so that a user can be specified by distinguishing a cell phone, or a user may be specified by recognizing a face of a user with a camera (not shown) of an intercom (not shown).
After detection of a homecoming of a person, the air-conditioning control apparatus analyzes life patterns based on power consumption of home electric appliances and a lighting fixture 95 and/or analyzes life patterns based on outputs, such as infrared radiation, ultrasound, and visible light from the human detection sensor 205 to store such information daily. A sensor for, for example, infrared radiation, ultrasound, or visible light may be placed on a wall or a ceiling of a house or may be incorporated in the air-conditioner 63.

(Advantages of Embodiment 9)

As described above, in Embodiment 9, in a case where a plurality of air-conditioners 63 are provided, the air-conditioning control apparatus further includes the selection unit 221 for selecting at least one of the air-conditioners 63 as a control target of a preceding operation based on life pattern information of a person.
Thus, in a case where the HEMS 51 includes a plurality of air-conditioners 63 and one or more of the air-conditioners 63 are automatically selected as an operation target depending on life patterns after homecomings, the air-conditioners 63 do not need to be selected, and thus, convenience can be enhanced.

Embodiment 10

(Different Aspects)

In Embodiment 10, it is clearly described that a set temperature Tset is processed as an integer value.

(Configuration of Embodiment 10)

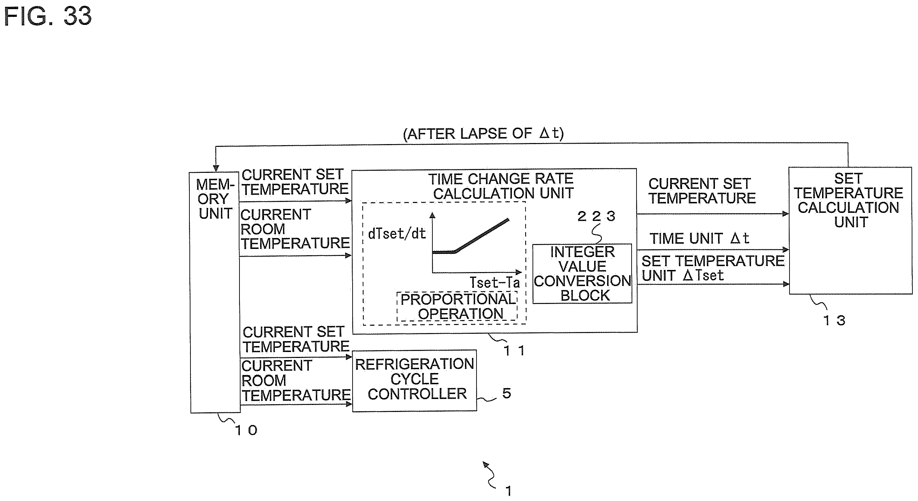

Fig. 33 illustrates an air-conditioning control apparatus that performs a process of converting a set temperature Tset to an integer value in Embodiment 10 of the present invention. As illustrated in Fig. 33, the set temperature calculation unit 13 includes, for example, an integer value conversion block 223. The integer value conversion block 223 converts a set temperature Tset at the current time to data corresponding to an integer value.

(Advantages of Embodiment 10)

As described above, in Embodiment 10, a set temperature determination section 2 further includes the integer value conversion block 223 that converts a set temperature Tset at the current time to data corresponding to an integer value.
Thus, the air-conditioning control apparatus can calculate a set temperature Tset without a complicated calculation configuration such as a floating point so that a functional configuration can be obtained at low costs.
For example, in a case where the air-conditioning control apparatus controls an air-conditioner 63 with an external control device such as a HEMS controller 83, a recommended standard interface, such as ECHONET Lite (registered trademark), that is used for commonly performing operations such as operation stop, a change of an operation mode, and a change of a set temperature Tset is provided. In the case of such a standard interface, since the set temperature Tset is changed by 1 degree C at each time, power saving control can be applied to air-conditioners 63 of any manufacturer by converting a set temperature Tset of the power saving control to an integer value. Thus, flexibility in application can be enhanced.

(Common Features among Embodiments 1 through 10)

In Embodiments 1 through 10, programs to be executed are distributed in the state of being stored in a computer-readable recording medium such as a magnetic disk (including a flexible disk), an optical disk including a compact disk read-only memory (CD-ROM) and a digital versatile disk (DVD), a magneto-optical medium such as a magneto-optical disk (MO), a removable medium constituted by a semiconductor memory, or a hard disk, and a system executing the processes described above is configured by installing the programs.
Such programs may be stored in, for example, a disk drive included in a predetermined server device on a communication network such as the Internet and superimposed on a carrier wave to be downloaded.
In a case where the functions described above are implemented by an operating system (OS) or by a cooperation of an OS and an application, for example, only a part of the functions except for a part implemented by the OS may be stored in a medium to be distributed, or may be distributed by downloading, for example.
Steps of describing programs for performing operations of Embodiments 1 through 10 of the present invention are performed on a time-series basis in the order described herein. Alternatively, the steps are not necessarily performed on a time-series basis and may include steps performed in parallel or individually.
Functions described in Embodiments 1 through 10 may be implemented by any of hardware or software. That is, the block diagrams described in Embodiments 1 through 10 may be block diagrams of hardware or functional block diagrams of software. For example, the block diagrams may be implemented by hardware such as circuit devices or software executed on a computing device such as an unillustrated processors.
The blocks of the block diagrams described in Embodiments 1 through 10 only need to have their functions performed, and the configurations of the blocks do not need to be separated in correspondence to the individual blocks. In each of Embodiments 1 to 10, items that are not specifically described are common in Embodiments 1 to 10, and the same reference characters designate the same functions or configurations. Each of Embodiments 1 to 10 may be performed alone or in combination. In either case, advantages described later can be obtained. In Embodiments 1 through 10, only one specific example of the configuration is described. However, the present invention is not limited to this example.
In Embodiments 1 through 10, the system refers to an entire apparatus constituted by a plurality of devices. In Embodiments 1 through 10, the network refers to a structure in which at least two devices are connected to each other so that information is transmitted from one of the devices to the other. Devices that communicate with each other through the network may be independently provided devices or may be internal blocks constituting one device. In Embodiments 1 through 10, communication may be a combination of wireless communication or wired communication as well as wireless communication and wired communication. For example, wireless communication may be performed in one section with wired communication being performed in another section. Communication from one device to another device may be performed by wires with communication in the opposite direction being performed wirelessly.

Reference Signs List

5 refrigeration cycle controller, 10 memory unit, 11 time change rate calculation unit, 13 set temperature calculation unit, 51 HEMS, 63 air-conditioner, 65 remote controller, 71 electric vehicle, 73 power conditioner, 75 photovoltaic array, 77 electric power company, 79 distribution switchboard, 81 power consumption measuring instrument, 83 HEMS controller, 85 communication device, 87 public network, 88 communication device, 89 terminal, 91 IH cooking heater, 93 range grill, 95 lighting fixture, 101 storage battery, 111 power supply line, 113 communication line, 121 house, 131 indoor space, 132 outdoor space, 141 outdoor unit, 143 indoor unit, 147 refrigerant pipe, 151 compressor, 152 four-way valve, 153 outdoor heat exchanger, 154 expansion valve, 155 indoor heat exchanger, 161 outdoor fan, 163 indoor fan, 171, 173 measurement control device, 181 communication line, 201 room temperature sensor, 203 infrared radiation sensor, 205 human detection sensor, 211 temperature conversion unit, 213 temperature limiting unit, 215 current limiting unit, 217 communication unit, 219 presence detection unit, 221 selection unit, 223 integer value conversion block.

## Claims

1. An air-conditioning control apparatus configured to control an air-conditioner (63) to perform a preceding operation in which the air-conditioner (63) starts operating before a specified time in such a manner that a room temperature reaches a target temperature at the specified time, the air-conditioning control apparatus comprising:

   a set temperature determination section configured to determine a time unit during which a current set temperature is maintained and a set temperature unit by which a subsequent set temperature is determined; and
   a refrigeration cycle controller (5) configured to control the air-conditioner (63) based on the current set temperature, wherein
   the set temperature determination section is configured to

   determine a time change rate of a set temperature based on a current room temperature,
   determine the time unit and the subsequent set temperature based on the current set temperature and the time change rate of the set temperature, wherein

   the set temperature unit is determined based on the time change rate of the set temperature, when the time unit is constant,
   the time unit is determined based on the time change rate of the set temperature, when the set temperature unit is constant, and
   change the current set temperature to the subsequent set temperature based on the current set temperature and the set temperature unit, when the time unit elapses,
   **characterized in that**
   the set temperature determination section is configured to increase the time change rate of the set temperature as a time change rate of the current room temperature increases.

2. The air-conditioning control apparatus of claim 1, wherein
   the set temperature determination section is configured to terminate the preceding operation when the current set temperature reaches the target temperature.

3. The air-conditioning control apparatus of claim 1, wherein
   the set temperature determination section is configured to terminate the preceding operation when a predetermined time has elapsed.

4.  The air-conditioning control apparatus of any one of claims 1 to 3, wherein
   the refrigeration cycle controller (5) is configured to start the air-conditioner (63) before the specified time.

5. The air-conditioning control apparatus of any one of claims 1 to 4, further comprising
   a temperature conversion unit (211) configured to convert a radiation temperature to a current room temperature, wherein
the air-conditioner (63) includes an infrared radiation sensor (203) configured to detect the radiation temperature of the air-conditioner (63).

**6.** The air-conditioning control apparatus of any one of claims 1 to 5, further comprising
a temperature limiting unit (213) configured to limit the target temperature.

**7.** The air-conditioning control apparatus of any one of claims 1 to 5, further comprising
a current limiting unit (215) configured to limit a current for driving the air-conditioner (63).

**8.** The air-conditioning control apparatus of any one of claims 1 to 7, further comprising
a communication unit (217) configured to transmit notification information or a communication permission request before the refrigeration cycle controller (5) controls the air-conditioner (63).

**9.** The air-conditioning control apparatus of any one of claims 1 to 8, further comprising
a presence detection unit (219) configured to determine whether a person is present or not based on presence determination information, wherein
in a case where absence of a person is detected after a lapse of a predetermined time since the air-conditioner (63) started, the presence detection unit (219) is configured either to supply an instruction of changing the subsequent set temperature to the set temperature determination section or to supply an instruction of stopping the air-conditioner (63) to the refrigeration cycle controller (5).

**10.** The air-conditioning control apparatus of claim 9, wherein
the presence detection unit (219) is configured to determine whether a person is present or not based on one of an operation history of a remote controller (65) for controlling the air-conditioner (63), a status of use of a device, power consumption information, a human detection sensor detection result, door open/close information, communication information, and position information.

**11.** The air-conditioning control apparatus of any one of claims 1 to 10, further comprising
a selection unit configured to select, in a case where the air-conditioner (63) includes a plurality of air-conditioners (63), at least one of the air-conditioners (63) as a target of control of the preceding operation depending on an operation history of each of the air-conditioners (63).

**12.** The air-conditioning control apparatus of any one of claims 1 to 10, further comprising
a selection unit configured to select, in a case where the air-conditioner (63) includes a plurality of air-conditioners (63), at least one of the air-conditioners (63) as a target of control of the preceding operation depending on life pattern information of a person.

**13.** The air-conditioning control apparatus of any one of claims 1 to 12, wherein
the set temperature determination section further includes an integer value conversion block (223) configured to convert the set temperature to data corresponding to an integer value.

**Patentansprüche**

**1.** Klimaanlagensteuervorrichtung, die ausgelegt ist, um eine Klimaanlage (63) dahingehend zu steuern, einen vorausgehenden Betrieb auszuführen, bei dem die Klimaanlage (63) den Betrieb vor einem spezifizierten Zeitpunkt aufnimmt, sodass eine Raumtemperatur zu dem spezifizierten Zeitpunkt eine Zieltemperatur erreicht, wobei die Klimaanlagensteuervorrichtung Folgendes umfasst:

einen Solltemperatur-Bestimmungsabschnitt, der ausgelegt ist, um eine Zeiteinheit zu bestimmen, während der eine aktuelle Solltemperatur aufrechterhalten wird, und eine Solltemperatureinheit, durch die eine nachfolgende Solltemperatur bestimmt wird; und
eine Kühlkreislaufsteuerung (5), die ausgelegt ist, um die Klimaanlage (63) auf Basis der aktuellen Solltemperatur zu steuern, wobei
der Solltemperatur-Bestimmungsabschnitt ausgelegt ist,

eine Zeitänderungsrate einer Solltemperatur auf Basis einer aktuellen Raumtemperatur zu bestimmen,

die Zeiteinheit und die nachfolgende Solltemperatur auf Basis der aktuellen Solltemperatur und der Zeitänderungsrate der Solltemperatur zu bestimmen, wobei

die Solltemperatureinheit auf Basis der Zeitänderungsrate der Solltemperatur bestimmt wird, wenn die Zeiteinheit konstant ist,
die Zeiteinheit auf Basis der Zeitänderungsrate der Solltemperatur bestimmt wird, wenn die Solltemperatureinheit konstant ist, und
die aktuelle Solltemperatur auf die nachfolgende Solltemperatur auf Basis der aktuellen Solltemperatur und der Solltemperatureinheit geändert wird, wenn die Zeiteinheit verstrichen ist,
**dadurch gekennzeichnet, dass**
der Solltemperatur-Bestimmungsabschnitt ausgelegt ist, um die Zeitänderungsrate der Solltemperatur zu erhöhen, wenn eine Zeitänderungsrate der aktuellen Raumtemperatur zunimmt.

2. Klimaanlagensteuervorrichtung nach Anspruch 1, wobei der Solltemperatur-Bestimmungsabschnitt ausgelegt ist, um den vorausgehenden Betrieb zu beenden, wenn die aktuelle Solltemperatur die Zieltemperatur erreicht hat.

3. Klimaanlagensteuervorrichtung nach Anspruch 1, wobei der Solltemperatur-Bestimmungsabschnitt ausgelegt ist, um den vorausgehenden Betrieb zu beenden, wenn eine vorbestimmte Zeitspanne verstrichen ist.

4. Klimaanlagensteuervorrichtung nach einem der Ansprüche 1 bis 3, wobei die Kühlkreislaufsteuerung (5) ausgelegt ist, um die Klimaanlage (63) vor dem spezifizierten Zeitpunkt zu starten.

5. Klimaanlagensteuervorrichtung nach einem der Ansprüche 1 bis 4, die ferner eine Temperaturumwandlungseinheit (211) umfasst, die ausgelegt ist, um eine Strahlungstemperatur zu einer aktuellen Raumtemperatur umzuwandeln, wobei
die Klimaanlage (63) einen Infrarotstrahlensensor (203) umfasst, der ausgelegt ist, um die Strahlungstemperatur der Klimaanlage (63) zu detektieren.

6. Klimaanlagensteuervorrichtung nach einem der Ansprüche 1 bis 5, die ferner eine Temperaturbegrenzungseinheit (213) umfasst, die ausgelegt ist, um die Zieltemperatur zu begrenzen.

7. Klimaanlagensteuervorrichtung nach einem der Ansprüche 1 bis 5, die ferner eine Strombegrenzungseinheit (215) umfasst, die ausgelegt ist, um den Strom zum Betreiben der Klimaanlage (63) zu begrenzen.

8. Klimaanlagensteuervorrichtung nach einem der Ansprüche 1 bis 7, die ferner eine Kommunikationseinheit (217) umfasst, die ausgelegt ist, um Benachrichtigungsinformationen oder eine Kommunikationserlaubnisanfrage zu senden, bevor die Kühlkreislaufsteuerung (5) die Klimaanlage (63) steuert.

9. Klimaanlagensteuervorrichtung nach einem der Ansprüche 1 bis 8, die ferner eine Anwesenheitsdetektionseinheit (219) umfasst, um auf Basis von Anwesenheitsbestimmungsinformationen zu bestimmen, ob eine Person anwesend ist, wobei in dem Fall, dass die Abwesenheit einer Person nach Ablauf einer vorbestimmten Zeitspanne seit dem Start der Klimaanlage (63) detektiert wird, die Anwesenheitsdetektionseinheit (219) ausgelegt ist, um entweder dem Solltemperatur-Bestimmungsabschnitt einen Befehl zum Ändern der nachfolgenden Solltemperatur bereitzustellen oder um der Kühlkreislaufsteuerung (5) einen Befehl zum Stoppen der Klimaanlage (63) bereitzustellen.

10. Klimaanlagensteuervorrichtung nach Anspruch 9, wobei die Anwesenheitsdetektionseinheit (219) ausgelegt ist, um zu bestimmen, ob eine Person anwesend ist, und zwar auf Basis von entweder einem Betriebsverlauf einer Fernsteuerung (65) zur Steuerung der Klimaanlage (63), einem Benutzerstatus einer Vorrichtung, Energieverbrauchinformationen, einem Menschdetektionssensor-Detektionsergebnis, Informationen über offene/geschlossene Türen, Kommunikationsinformationen und Positionsinformationen.

11. Klimaanlagensteuervorrichtung nach einem der Ansprüche 1 bis 10, die ferner eine Auswahleinheit umfasst, die ausgelegt ist, um in dem Fall, dass die Klimaanlage (63) eine Vielzahl von Klimaanlagen (63) umfasst, zumindest eine der Klimaanlagen (63) als Ziel zur Steuerung des vorausgehenden Betriebs je nach Betriebsverlauf jeder der Klimaanlagen (63) auszuwählen.

12. Klimaanlagensteuervorrichtung nach einem der Ansprüche 1 bis 10, die ferner eine Auswahleinheit umfasst, die ausgelegt ist, um in dem Fall, dass die Klimaanlage (63) eine Vielzahl von Klimaanlagen (63) umfasst, zumindest eine der Klimaanlagen (63) als Ziel zur Steuerung des vorausgehenden Betriebs je nach Lebensrhythmusinformationen einer Person auszuwählen.

**13.** Klimaanlagensteuervorrichtung nach einem der Ansprüche 1 bis 12, wobei der Solltemperatur-Bestimmungsabschnitt ferner einen Ganzzahlwert-Umwandlungsblock (223) umfasst, der ausgelegt ist, um die Solltemperatur in Daten umzuwandeln, die einem ganzzahligen Wert entsprechen.

**Revendications**

**1.** Appareil de commande de climatisation configuré pour commander un climatiseur (63) afin d'effectuer une opération précédente au cours de laquelle le climatiseur (63) commence à fonctionner avant un temps spécifié de telle manière qu'une température ambiante atteigne une température cible au temps spécifié, l'appareil de commande de climatisation comprenant :

une section de détermination de température de consigne configurée pour déterminer une unité de temps pendant laquelle une température de consigne actuelle est maintenue et une unité de température de consigne par laquelle une température de consigne suivante est déterminée ; et
une commande de cycle de réfrigération (5) configurée pour commander le climatiseur (63) sur la base de la température de consigne actuelle, dans lequel
la section de détermination de température de consigne est configurée pour
déterminer un taux de changement temporel d'une température de consigne sur la base d'une température ambiante actuelle,
déterminer l'unité de temps et la température de consigne suivante sur la base de la température de consigne actuelle et du taux de changement temporel de la température de consigne, dans lequel
l'unité de température de consigne est déterminée sur la base du taux de changement temporel de la température de consigne, lorsque l'unité de temps est constante,
l'unité de temps est déterminée sur la base du taux de changement temporel de la température de consigne, lorsque l'unité de température de consigne est constante, et
changer la température de consigne actuelle pour la température de consigne suivante en fonction de la température de consigne actuelle et de l'unité de température de consigne, lorsque l'unité de temps s'est écoulée,
**caractérisé en ce que**
la section de détermination de température de consigne est configurée pour augmenter le taux de changement temporel de la température de consigne à mesure qu'un taux de changement temporel de la température ambiante actuelle augmente.

**2.** Appareil de commande de climatisation selon la revendication 1, dans lequel
la section de détermination de température de consigne est configurée pour terminer l'opération précédente lorsque la température de consigne actuelle atteint la température cible.

**3.** Appareil de commande de climatisation selon la revendication 1, dans lequel
la section de détermination de température de consigne est configurée pour terminer l'opération précédente lorsqu'un temps prédéterminé s'est écoulé.

**4.** Appareil de commande de climatisation selon l'une quelconque des revendications 1 à 3, dans lequel
la commande de cycle de réfrigération (5) est configurée pour démarrer le climatiseur (63) avant l'heure spécifiée.

**5.** Appareil de commande de climatisation selon l'une quelconque des revendications 1 à 4, comprenant en outre
une unité de conversion de température (211) configurée pour convertir une température de rayonnement en une température ambiante actuelle, dans lequel
le climatiseur (63) comprend un capteur de rayonnement infrarouge (203) configuré pour détecter la température de rayonnement du climatiseur (63).

**6.** Appareil de commande de climatisation selon l'une quelconque des revendications 1 à 5, comprenant en outre
une unité de limitation de température (213) configurée pour limiter la température cible.

**7.** Appareil de commande de climatisation selon l'une quelconque des revendications 1 à 5, comprenant en outre
une unité de limitation de courant (215) configurée pour limiter un courant pour entraîner le climatiseur (63).

8. Appareil de commande de climatisation selon l'une quelconque des revendications 1 à 7, comprenant en outre une unité de communication (217) configurée pour transmettre des informations de notification ou une demande d'autorisation de communication avant que la commande de cycle de réfrigération (5) ne commande le climatiseur (63).

9. Appareil de commande de climatisation selon l'une quelconque des revendications 1 à 8, comprenant en outre une unité de détection de présence (219) configurée pour déterminer si une personne est présente ou non sur la base d'informations de détermination de présence, dans lequel
dans un cas où l'absence d'une personne est détectée après un laps de temps prédéterminé depuis le démarrage du climatiseur (63), l'unité de détection de présence (219) est configurée soit pour fournir une instruction de changement de la température de consigne suivante à la section de détermination de température de consigne ou pour fournir une instruction d'arrêt du climatiseur (63) à la commande de cycle de réfrigération (5).

10. Appareil de commande de climatisation selon la revendication 9, dans lequel
l'unité de détection de présence (219) est configurée pour déterminer si une personne est présente ou non sur la base de l'un d'un historique de fonctionnement d'une télécommande (65) pour commander le climatiseur (63), d'un état d'utilisation d'un dispositif, d'informations de consommation d'énergie, d'un résultat de détection de capteur de détection humaine, d'informations d'ouverture/fermeture de porte, d'informations de communication, et d'informations de position.

11. Appareil de commande de climatisation selon l'une quelconque des revendications 1 à 10, comprenant en outre une unité de sélection configurée pour sélectionner, dans le cas où le climatiseur (63) comprend une pluralité de climatiseurs (63), au moins l'un des climatiseurs (63) comme cible de commande de l'opération précédente en fonction d'un historique de fonctionnement de chacun des climatiseurs (63).

12. Appareil de commande de climatisation selon l'une quelconque des revendications 1 à 10, comprenant en outre une unité de sélection configurée pour sélectionner, dans un cas où le climatiseur (63) comprend une pluralité de climatiseurs (63), au moins l'un des climatiseurs (63) comme cible de contrôle de l'opération précédente en fonction d'informations de mode de vie d'une personne.

13. Appareil de commande de climatisation selon l'une quelconque des revendications 1 à 12, dans lequel
la section de détermination de température de consigne comprend en outre un bloc de conversion de valeur entière (223) configuré pour convertir la température de consigne en données correspondant à une valeur entière.

FIG. 1

EXAMPLE IN WHICH TIME
CHANGE RATE OF SET
TEMPERATURE Tset
DOES NOT CHANGE

TARGET TEMPERATURE
Tm = 20 DEGREES C

TEMPERATURE

SET
TEMPERATURE
Tset

ROOM
TEMPERATURE Ta

INITIAL ROOM
TEMPERATURE Ta0

PREHEATING TIME (PRECEDING TIME)

TIME

START TIME

COMPLETION TIME

FIG. 2

EXAMPLE IN WHICH TIME
CHANGE RATE OF SET
TEMPERATURE Tset
DOES NOT CHANGE

TARGET TEMPERATURE
Tm = 20 DEGREES C

TEMPERATURE

EXPECTED ROOM
TEMPERATURE Tp

SET
TEMPERATURE
Tset

ROOM
TEMPERATURE Ta

INITIAL ROOM
TEMPERATURE Ta0

PREHEATING TIME (PRECEDING TIME)

TIME

START TIME

COMPLETION TIME

27

FIG. 3

TEMPERATURE

EXAMPLE IN WHICH TIME CHANGE
RATE OF SET TEMPERATURE Tset
CHANGES

EXPECTED ROOM
TEMPERATURE Tp

TARGET TEMPERATURE
Tm = 20 DEGREES C

SET
TEMPERATURE
Tset

INITIAL ROOM
TEMPERATURE Ta0

ROOM
TEMPERATURE Ta

PREHEATING TIME (PRECEDING TIME)

TIME

START TIME

COMPLETION TIME

FIG. 4

TEMPERATURE

EXAMPLE IN WHICH TIME CHANGE
RATE OF SET TEMPERATURE Tset
CHANGES

SUBSEQUENT SET
TEMPERATURE

TARGET TEMPERATURE
Tm = 20 DEGREES C

CURRENT SET
TEMPERATURE

PREVIOUS SET
TEMPERATURE

$\Delta T$

$\Delta Tset$

$\Delta T'$

$\Delta Tset'$

CURRENT ROOM
TEMPERATURE

PREVIOUS ROOM TEMPERATURE

PREHEATING TIME (PRECEDING TIME)

TIME

START TIME

COMPLETION TIME

## FIG. 5

Δt vs dTset/dt — ΔTset: CONSTANT

## FIG. 6

ΔTset vs dTset/dt — Δt: CONSTANT

FIG. 7

(AFTER LAPSE OF $\Delta t$)

| MEM-ORY UNIT | | TIME CHANGE RATE CALCULATION UNIT | | SET TEMPERATURE CALCULATION UNIT |

CURRENT SET TEMPERATURE

CURRENT ROOM TEMPERATURE

$dTset/dt$

$Tset-Ta$

PROPORTIONAL OPERATION

CURRENT SET TEMPERATURE

TIME UNIT $\Delta t$

SET TEMPERATURE UNIT $\Delta Tset$

CURRENT SET TEMPERATURE

CURRENT ROOM TEMPERATURE

REFRIGERATION CYCLE CONTROLLER          5

1 1

1 3

1 0

EP 3 076 092 B1

# FIG. 8

(AFTER LAPSE OF $\Delta t$)

MEM-ORY UNIT

CURRENT SET TEMPERATURE

CURRENT ROOM TEMPERATURE

PREVIOUS TIME UNIT $\Delta t'$

PREVIOUS SET TEMPERATURE UNIT $\Delta Tset'$

CURRENT SET TEMPERATURE

CURRENT ROOM TEMPERATURE

TIME CHANGE RATE CALCULATION UNIT

$d^2 Tset/dt^2$

$Tset-Ta$

INTEGRAL OPERATION

1 1

CURRENT SET TEMPERATURE

TIME UNIT $\Delta t$

SET TEMPERATURE UNIT $\Delta Tset$

SET TEMPERATURE CALCULATION UNIT

1 3

REFRIGERATION CYCLE CONTROLLER

5

1 0

EP 3 076 092 B1

FIG. 9

FIG. 10

EP 3 076 092 B1

(AFTER LAPSE OF $\Delta$t)

| MEM-ORY UNIT | EXPECTED ROOM TEM-PERATURE Tp |
|---|---|
| | CURRENT ROOM TEMPERATURE |

TIME CHANGE RATE CALCULATION UNIT

dTset/dt

Tp-Ta

PROPORTIONAL OPERATION

1 1

CURRENT SET TEMPERATURE

TIME UNIT $\Delta$t

SET TEMPERATURE UNIT $\Delta$Tset

SET TEMPERATURE CALCULATION UNIT

1 3

CURRENT SET TEMPERATURE

CURRENT ROOM TEMPERATURE

REFRIGERATION CYCLE CONTROLLER

5

1 0

# FIG. 11

(AFTER LAPSE OF Δt)

MEM-ORY UNIT

EXPECTED ROOM TEM-PERATURE Tp

CURRENT ROOM TEMPERATURE

PREVIOUS TIME UNIT Δt'

PREVIOUS SET TEMPERATURE UNIT ΔTset'

CURRENT SET TEMPERATURE

CURRENT ROOM TEMPERATURE

10

TIME CHANGE RATE CALCULATION UNIT

$d^2Tset/dt^2$

Tp-Ta

INTEGRAL OPERATION

11

REFRIGERATION CYCLE CONTROLLER

5

CURRENT SET TEMPERATURE

TIME UNIT Δt

SET TEMPERATURE UNIT ΔTset

SET TEMPERATURE CALCULATION UNIT

13

FIG. 12

(AFTER LAPSE OF Δt)

EXPECTED ROOM TEM-
PERATURE Tp

```
MEM-      CURRENT          TIME CHANGE RATE        CURRENT SET          SET
ORY       ROOM             CALCULATION UNIT        TEMPERATURE          TEMPERATURE
UNIT      TEMPERATURE                                                   CALCULATION
          ―――――――――                                                    UNIT
          PREVIOUSLY        dTset/dt               TIME UNIT Δt
          EXPECTED
          TEMPERATURE                              SET TEMPERATURE
          ―――――――――                   d(Tp-Ta)/dt  UNIT ΔTset
          PREVIOUS
          ROOM                        DERIVATIVE
          TEMPERATURE                 OPERATION                         13
          ―――――――――
          CURRENT SET                            11
          TEMPERATURE
          ―――――――――         REFRIGERATION
          CURRENT           CYCLE
          ROOM              CONTROLLER      5
          TEMPERATURE
```

10

FIG. 13

(AFTER LAPSE OF $\Delta t$)

SET TEMPERATURE CALCULATION UNIT
13

CURRENT SET TEMPERATURE

TIME UNIT $\Delta t$

SET TEMPERATURE UNIT $\Delta$Tset

TIME CHANGE RATE CALCULATION UNIT

dTset/dt

dTa/dt

PROPORTIONAL OPERATION

11

REFRIGERATION CYCLE CONTROLLER
5

PREVIOUS ROOM TEMPERATURE

CURRENT ROOM TEMPERATURE

CURRENT SET TEMPERATURE

CURRENT ROOM TEMPERATURE

MEM-ORY UNIT

10

# FIG. 14

(AFTER LAPSE OF $\Delta t$)

| MEM-ORY UNIT | | |
|---|---|---|
| | PREVIOUS ROOM TEMPERATURE | |
| | CURRENT ROOM TEMPERATURE | |
| | PREVIOUS TIME UNIT $\Delta t'$ | |
| | PREVIOUS SET TEMPERATURE UNIT $\Delta Tset'$ | |
| | CURRENT SET TEMPERATURE | |
| | CURRENT ROOM TEMPERATURE | |

TIME CHANGE RATE CALCULATION UNIT

$d^2Tset/dt^2$

$dTa/dt$

INTEGRAL OPERATION

1 1

CURRENT SET TEMPERATURE

TIME UNIT $\Delta t$

SET TEMPERATURE UNIT $\Delta Tset$

SET TEMPERATURE CALCULATION UNIT

1 3

REFRIGERATION CYCLE CONTROLLER

5

1 0

# FIG. 15

(AFTER LAPSE OF $\Delta t$)

| MEM-ORY UNIT | | TIME CHANGE RATE CALCULATION UNIT | | SET TEMPERATURE CALCULATION UNIT |

PREVIOUS ROOM TEMPERATURE

CURRENT ROOM TEMPERATURE

TEMPERATURE AT THE TIME BEFORE LAST

$dTset/dt$

$d(Ta)\,^2/dt\,^2$

DERIVATIVE OPERATION

CURRENT SET TEMPERATURE

TIME UNIT $\Delta t$

SET TEMPERATURE UNIT $\Delta Tset$

1 3

1 1

CURRENT SET TEMPERATURE

CURRENT ROOM TEMPERATURE

REFRIGERATION CYCLE CONTROLLER

5

1 0

FIG. 16

(AFTER LAPSE OF Δt)

MEM-ORY UNIT

TARGET TEMPERATURE
CURRENT ROOM TEMPERATURE
SPECIFIED TIME
CURRENT TIME

x

TIME CHANGE RATE CALCULATION UNIT

dTset/dt

PROPORTIONAL OPERATION

x

CURRENT SET TEMPERATURE

TIME UNIT Δt

SET TEMPERATURE UNIT ΔTset

SET TEMPERATURE CALCULATION UNIT

13

11

CURRENT SET TEMPERATURE

CURRENT ROOM TEMPERATURE

REFRIGERATION CYCLE CONTROLLER

5

10

EP 3 076 092 B1

# FIG. 17

EP 3 076 092 B1

# FIG. 18

(AFTER LAPSE OF $\Delta t$)

MEM-ORY UNIT

x
PREVIOUS TIME x

TIME CHANGE RATE CALCULATION UNIT

dTset/dt

dx/dt

DERIVATIVE OPERATION

CURRENT SET TEMPERATURE

TIME UNIT $\Delta t$

SET TEMPERATURE UNIT $\Delta$Tset

SET TEMPERATURE CALCULATION UNIT

1 3

CURRENT SET TEMPERATURE

CURRENT ROOM TEMPERATURE

REFRIGERATION CYCLE CONTROLLER

5

1 1

1 0

EP 3 076 092 B1

FIG. 19

FIG. 20

# FIG. 21

```
                    ( POWER SAVING CONTROL )
                    (    PROCESS START      )
                              |
      ------------------------|--------------------------
      | OPERATION PREPARATION |                         |
S11   | PROCESS    ---------------------------------    |
      |           | ACQUIRE AIR-CONDITIONING-       |   |
      |           |   RELATED INFORMATION           |   |
      |            ---------------------------------    |
S12   |           | SELECT SET TEMPERATURE          |   |
      |           | BASED ON ROOM TEMPERATURE       |   |
      |            ---------------------------------    |
S13   |           | SUPPLY OPERATION START          |   |
      |           | INSTRUCTION TO AIR-CONDITIONER  |   |
      ------------------------|--------------------------
      ------------------------|--------------------------
      | OPERATION PROCESS FOR                           |
      | POWER SAVING CONTROL                            |
      |                       |                   NO    |
S14   |           < TIME UNIT Δt HAS ELAPSED? >-------->|
      |                    YES |                        |
      |                       |                        |
S15   |           | SET TEMPERATURE Tset |              |
      |           |  CHANGING PROCESS    |              |
      |                       |                        |
S16   |           < SET TEMPERATURE Tset  \  NO         |
      |           < HAS REACHED TARGET     >----------->|
      |           <  TEMPERATURE Tm?      /             |
      |                    YES |                        |
      ------------------------|--------------------------
      ------------------------|--------------------------
      | OPERATION PROCESS FOR |                         |
      | NORMAL CONTROL        |                         |
S17   |           | SWITCH TO NORMAL CONTROL |          |
      ------------------------|--------------------------
                    (    POWER SAVING       )
                    ( CONTROL PROCESS END   )
```

# FIG. 22

```
   ┌─────────────────────────────┐
   │    SET TEMPERATURE Tset     │
   │   CHANGING PROCESS START    │
   └─────────────────────────────┘
              │
   S31        ▼
        ┌──────────────────┐
        │    DETERMINE     │
        │ TIME CHANGE RATE │
        │   dTset/dt OF    │
        │ SET TEMPERATURE  │
        └──────────────────┘
              │
   S32        ▼
        ┌──────────────────────┐         NO
        │    CORRECT TIME      │
        │ CHANGE RATE dTset/dt OF │──────────────┐
        │ SET TEMPERATURE UNDER│               │
        │     PID CONTROL?     │               │
        └──────────────────────┘               │
            YES │                              │
   S33          ▼                              │
        ┌──────────────────┐                   │
        │     TYPE OF       │                   │
        │   PID CONTROL?    │                   │
        └──────────────────┘                   │
  ┌──────────┬──────────┬──────────┐     S41    ▼
  │PROPORTIONAL│ INTEGRAL │DERIVATIVE│      ┌──────────────┐
  │ CONTROL   │ CONTROL  │ CONTROL  │      │  CHANGE SET  │
  └──────────┴──────────┴──────────┘      │ TEMPERATURE  │
   S34        S35         S36              │ IN ACCORDANCE│
    │          │           │              │  WITH TIME   │
    ▼          ▼           ▼              │   CHANGE     │
 ┌────────┐ ┌────────┐ ┌──────────┐       │ RATE dTset/dt│
 │OBTAIN  │ │OBTAIN  │ │ OBTAIN   │       │   OF SET     │
 │TIME    │ │TIME    │ │ TIME     │       │ TEMPERATURE  │
 │CHANGE  │ │CHANGE  │ │ CHANGE   │       └──────────────┘
 │RATE    │ │RATE    │ │ RATE     │              │
 │BASED ON│ │BASED ON│ │ BASED ON │              │
 │PROPOR- │ │INTEGRAL│ │DERIVATIVE│              │
 │TIONAL  │ │CONTROL │ │ CONTROL  │              │
 │CONTROL │ │        │ │          │              │
 └────────┘ └────────┘ └──────────┘              │
    │          │           │                     │
    └──────────┴───────────┴─────────────────────┘
              │
   S37        ▼
        ┌──────────────────────┐
        │  CORRECT TIME UNIT   │
        │  IN ACCORDANCE WITH  │
        │ TIME CHANGE RATE dTset/dt │
        │  OF SET TEMPERATURE  │
        └──────────────────────┘
              │
   S38        ▼                  NO
        ┌──────────────────┐
        │  TIME UNIT HAS   │──────┐
        │    ELAPSED?      │      │
        └──────────────────┘      │
            YES │                 │
   S39          ▼                 │
        ┌──────────────────┐      │
        │   CHANGE SET     │      │
        │   TEMPERATURE    │      │
        └──────────────────┘      │
              │                   │
   S40        ▼                   │
        ┌──────────────────────┐  │
        │CONTROL REFRIGERATION │  │
        │ CYCLE IN ACCORDANCE  │  │
        │ WITH SET TEMPERATURE │  │
        └──────────────────────┘  │
              │                   │
              ▼                   │
   ┌─────────────────────────────┐│
   │    SET TEMPERATURE Tset     ││
   │   CHANGING PROCESS END      ││
   └─────────────────────────────┘│
```

# FIG. 23

POWER SAVING TIMER
CONTROL PROCESS START

S 5 1 — ACQUIRE AIR-CONDITIONING-RELATED INFORMATION

S 5 2 — OBTAIN TIME UNIT $\Delta t$ FOR EACH SET TEMPERATURE BASED ON AIR-CONDITIONING-RELATED INFORMATION

S 5 3 — OBTAIN TOTAL TIME OF TIME UNITS $\Delta t$

S 5 4 — SUBTRACT TOTAL TIME OF TIME UNITS $\Delta t$ FROM SPECIFIED TIME

S 5 5 — DETERMINE PRECEDING OPERATION START TIME BASED ON SUBTRACTION RESULT

S 5 6 — PRECEDING OPERATION START TIME HAS COME?  NO

YES

S 5 7 — POWER SAVING CONTROL PROCESS

POWER SAVING TIMER
CONTROL PROCESS END

# FIG. 24

S 7 1
S 7 2
S 7 3
S 7 4
S 7 5
S 7 6
S 7 7

POWER SAVING TIMER
CONTROL PROCESS START

OPERATION PREPARATION PROCESS

ACQUIRE AIR-CONDITIONING-RELATED INFORMATION

SELECT SET TEMPERATURE BASED ON ROOM TEMPERATURE

SUPPLY OPERATION START INSTRUCTION TO AIR-CONDITIONER

OPERATION PROCESS FOR POWER SAVING CONTROL

TIME UNIT Δt HAS ELAPSED? — N O

Y E S

SET TEMPERATURE Tset CHANGING PROCESS

COMPLETION TIME HAS COME? — N O

Y E S

OPERATION PROCESS FOR NORMAL CONTROL

SWITCH TO NORMAL CONTROL

POWER SAVING CONTROL PROCESS END

FIG. 25

FIG. 26

**SET TEMPERATURE CALCULATION UNIT** — 1 3

**TIME CHANGE RATE CALCULATION UNIT** — 1 1
dTset/dt
Tset-Ta
PROPORTIONAL OPERATION

**REFRIGERATION CYCLE CONTROLLER** — 5

**MEM-ORY UNIT** — 1 0

**TEMPER-ATURE CONVER-SION UNIT** — 2 1 1

CURRENT SET TEMPERATURE
TIME UNIT Δt
SET TEMPERATURE UNIT ΔTset

(AFTER LAPSE OF Δt)

CURRENT SET TEMPERATURE
SENSIBLE TEMPEATURE

CURRENT SET TEMPERATURE
CURRENT ROOM TEMPERATURE

SENSIBLE TEMPER-ATURE

RADIATION TEMPERATURE
CURRENT ROOM TEMPERATURE

1

FIG. 27

CURRENT SET
TEMPERATURE

TIME CHANGE RATE
CALCULATION UNIT

CURRENT SET
TEMPERATURE

SET
TEMPERATURE
CALCULATION
UNIT

(AFTER LAPSE OF $\Delta t$)

MEM-
ORY
UNIT

CURRENT
ROOM
TEMPERATURE

$dTset/dt$

Tset-Ta

TIME UNIT $\Delta t$

SET TEMPERATURE
UNIT $\Delta Tset$

PROPORTIONAL
OPERATION

1 1

1 3

LIMITED
TARGET
TEMPER-
ATURE Tm

TARGET
TEMPERATURE Tm

TEMPERATURE
LIMITING UNIT

2 1 3

CURRENT SET
TEMPERATURE

CURRENT
ROOM
TEMPERATURE

REFRIGERATION
CYCLE
CONTROLLER

5

1 0

1

50

# FIG. 28

# FIG. 29

EP 3 076 092 B1

FIG. 30

EP 3 076 092 B1

EP 3 076 092 B1

FIG. 31

(AFTER LAPSE OF $\Delta t$)

MEM-ORY UNIT

CURRENT SET TEMPERATURE

CURRENT ROOM TEMPERATURE

TIME CHANGE RATE CALCULATION UNIT

dTset/dt

Tset-Ta

PROPORTIONAL OPERATION

CURRENT SET TEMPERATURE

TIME UNIT $\Delta t$

SET TEMPERATURE UNIT $\Delta$Tset

SET TEMPERATURE CALCULATION UNIT

1 3

1 1

CURRENT SET TEMPERATURE

CURRENT ROOM TEMPERATURE

REFRIGERATION CYCLE CONTROLLER

5

AIR-CONDITIONER SPECIFYING INFORMATION

1 0

2 2 1

SELECTION UNIT

OPERATION HISTORY

1

FIG. 32

(AFTER LAPSE OF $\Delta t$)

| MEM-ORY UNIT | |
|---|---|

CURRENT SET TEMPERATURE

CURRENT ROOM TEMPERATURE

**TIME CHANGE RATE CALCULATION UNIT**

$dTset/dt$

$Tset-Ta$

PROPORTIONAL OPERATION

CURRENT SET TEMPERATURE

TIME UNIT $\Delta t$

SET TEMPERATURE UNIT $\Delta Tset$

**SET TEMPERATURE CALCULATION UNIT**

1 3

1 1

CURRENT SET TEMPERATURE

CURRENT ROOM TEMPERATURE

**REFRIGERATION CYCLE CONTROLLER** 5

1 0     2 2 1

AIR-CONDITIONER SPECIFYING INFORMATION

SELECTION UNIT

LIFE PATTERN INFORMATION

1

EP 3 076 092 B1

# FIG. 33

(AFTER LAPSE OF Δt)

MEM-ORY UNIT

CURRENT SET TEMPERATURE

CURRENT ROOM TEMPERATURE

TIME CHANGE RATE CALCULATION UNIT

$dTset/dt$

$Tset-Ta$

PROPORTIONAL OPERATION

INTEGER VALUE CONVERSION BLOCK

2 2 3

CURRENT SET TEMPERATURE

TIME UNIT Δt

SET TEMPERATURE UNIT ΔTset

SET TEMPERATURE CALCULATION UNIT

1 3

1 1

CURRENT SET TEMPERATURE

CURRENT ROOM TEMPERATURE

REFRIGERATION CYCLE CONTROLLER

5

1 0

1

EP 3 076 092 B1

**EP 3 076 092 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63161338 A
- US 20100318227 A1
- EP 1326055 A1
- US 20100243231 A1